# EUROPEAN PATENT SPECIFICATION

(11) **EP 3 936 372 B1**
(45) Date of publication and mention of the grant of the patent: **25.12.2024**
(21) Application number: 20770450.3
(22) Date of filing: 06.03.2020
(51) Int. Cl.: B60L 15/20, B60L 15/00, B60L 53/67, B60L 53/66, B60L 53/65, B60L 53/63, B60L 53/24, B60L 53/14, B60L 58/12, B60L 50/60, H02J 7/00, G06Q 50/06, B60L 9/18, H01M 10/48, H01M 10/44, B60L 53/10, H01M 10/42, H02J 1/10, H02J 7/02

(54) **ELECTRIC MOVING BODY AND ELECTRIC MOVING BODY CHARGING SYSTEM**
ELEKTRISCHER BEWEGLICHER KÖRPER UND AUFLADESYSTEM FÜR ELEKTRISCHEN BEWEGLICHEN KÖRPER
CORPS MOBILE ÉLECTRIQUE ET SYSTÈME DE CHARGE DE CORPS MOBILE ÉLECTRIQUE

(30) Priority: 08.03.2019 JP 2019042291; 08.03.2019 JP 2019042293; 02.08.2019 JP 2019142701
(43) Date of publication of application: 12.01.2022
(73) Proprietor: Hitachi Power Solutions Co., Ltd., Hitachi-shi, Ibaraki 317-0073 (JP)
(72) Inventor: ISHIKAWA Takuya, Hitachi-shi, Ibaraki 317-0073 (JP); IDE Kazumasa, Hitachi-shi, Ibaraki 317-0073 (JP); ASANO Minoru, Hitachi-shi, Ibaraki 317-0073 (JP); MIYABE Shouzou, Hitachi-shi, Ibaraki 317-0073 (JP); SEKI Masaaki, Hitachi-shi, Ibaraki 317-0073 (JP); TANAKA Shintaro, Tokyo 100-8280 (JP)
(74) Representative: MERH-IP Matias Erny Reichl Hoffmann Patentanwälte PartG mbB
(86) International application number: PCT/JP2020/009862
(87) International publication number: WO 2020/184484

(56) References cited:
- EP-A1- 3 389 175
- DE-A1- 102016 206 945
- JP-A- 2012 080 683
- JP-A- 2014 230 301
- JP-B2- H0 141 520
- US-A1- 2014 265 942
- US-A1- 2015 266 382
- US-A1- 2017 349 054
- US-A1- 2018 254 732

## Description

### Technical Field

The present invention relates to an electric moving body and an electric moving body charging system.

### Background Art

For existing wind power generation facilities in certain territories, the 20-year period defined in the agreement under the Feed-in-Tariff (FIT) scheme for renewable energy, during which the wind power generation facilities could have sold power to the power system, will end soon. It is desirable to operate the wind power generation facilities even after the power-selling period ends.

Taking into account soaring fossil fuel prices, environmental concerns, prevention of global warming, and the like, plug-in hybrid electric vehicles and pure electric vehicles equipped with large-capacity storage batteries have been spotlighted, and accordingly the related market has rapidly expanded. This tendency is expected to further accelerate. Furthermore, PTL 2 discloses a mobile power conversion and distribution system, wherein a vehicle further carries a direct current input coupling to be connected to a direct current electrical power source, a DC output coupling, an alternating current input coupling, an AC output coupling, and electronics carried by the vehicle to control both AC and DC voltage and power levels. PTL 3 discloses an electric vehicle (EV) with an electric drive system, wherein the EV includes at least one energy source and a drive system coupled to the at least one energy source, and wherein when the EV is operating under a first mode, a first switch module is switched to assume a first state to allow a first output electrical power provided from the first converter and a second output electrical power provided from a second converter to be combined for driving a first load with the combined output electrical power. Eventually, PTL 4 discloses a converting device for a motor vehicle, wherein an active filter comprising N connection points each able to be connected to a corresponding phase of the AC network or grid is provided, and wherein the active filter is controlled according to a control law such as to achieve an inverter configured to transfer power from the high-voltage branch to the connection points of the active filter.

### Citation List

### Patent Literature

PTL 1: JP 2016-103971 A
PTL 2: US 2015/266382 A1
PTL 3: US 2014/265942 A1
PTL 4: EP 3 389 175 A1

### Summary of Invention

### Technical Problem

However, the electric vehicles require a power feeding facility disposed at a predetermined place in a normal charging type requiring a long charging time or a quick charging type enabling power charging in a short charging time. PTL 1 proposes securing a charge capacity by interconnecting a rapid charging device. An existing charging device is basically supplied with power from an AC commercial power system. Therefore, in order to improve the charging environment, it is necessary to newly install a charging facility in the commercial power system, which is very onerous in terms of cost.

On the other hand, in order to effectively utilize the existing wind power generation facilities, it is desirable to operate the existing wind power generation facilities by switching to power supply to the territories in a self-consumption type. Further, there are solar power generation facilities, private power generation facilities, and the like in the territories. For this reason, the inventors have studied an electric moving body charging method and a configuration thereof capable of effectively utilizing the power generation facilities in the territories, not restricting an electric vehicle charging method to the conventional one.

The present invention has been made to solve the above problems, and an object of the present invention is to provide an electric moving body and an electric moving body charging system capable of using a DC power feeding spot in a territory.

### Solution to Problem

In order to achieve the above object, the present invention provides an electric moving body as set out in the appended set of claims. Preferable embodiments are claimed by the dependent claims.

### Advantageous Effects of Invention

According to the present invention, the electric moving body can use a DC power feeding spot in a territory.

### Brief Description of Drawings

[FIG. 1] FIG. 1 is a diagram illustrating a configuration of a DC power supply facility in a management area according to a first embodiment.
[FIG. 2] FIG. 2 is a diagram illustrating a configuration of an electric moving body according to the first embodiment.
[FIG. 3] FIG. 3 is a diagram illustrating a configuration of a power reception switching device according to the first and second embodiments.
[FIG. 4] FIG. 4 is a diagram illustrating a configuration of an electrical insulation device according to the first, second, and third embodiments.
[FIG. 5] FIG. 5 is a diagram illustrating another configuration of a power feeding spot in the management area according to the first and second embodiments.
[FIG. 6A] FIG. 6A is a diagram illustrating another configuration of the electric moving body according to the first and second embodiments, representing an eco mode as a traveling mode.
[FIG. 6B] FIG. 6B is a diagram illustrating another configuration of the electric moving body according to the first and second embodiments, representing a power mode as a traveling mode.
[FIG. 7] FIG. 7 is a diagram illustrating a configuration of a DC power supply facility in a management area according to the second embodiment.
[FIG. 8] FIG. 8 is a diagram illustrating a configuration of an electric moving body according to the second embodiment.
[FIG. 9] FIG. 9 is a diagram illustrating a configuration of a management device according to the second embodiment.
[FIG. 10] FIG. 10 is a diagram illustrating an example of electric moving body management information in a storage unit according to the second embodiment.
[FIG. 11] FIG. 11 is a diagram illustrating an example of electric moving body charging information in the storage unit according to the second embodiment.
[FIG. 12] FIG. 12 is a flowchart illustrating an example of a processing unit of the management device according to the second embodiment.
[FIG. 13] FIG. 13 is a flowchart illustrating another example of the processing unit of the management device according to the second embodiment.
[FIG. 14] FIG. 14 is a diagram illustrating an example of required amount management information for the management area according to the second embodiment.
[FIG. 15] FIG. 15 is a diagram illustrating a configuration of an electric moving body charging system in a management area according to the third embodiment.
[FIG. 16] FIG. 16 is a diagram illustrating a configuration of an electric moving body in a charging mode according to the third embodiment.
[FIG. 17] FIG. 17 is a diagram illustrating a configuration of the electric moving body in a traveling mode according to the third embodiment.
[FIG. 18A] FIG. 18A is a diagram illustrating a relationship between a driving wheel axle and power conversion devices in a single-wheel driven type of the electric moving body according to the third embodiment. [FIG. 18B] FIG. 18B is a diagram illustrating a relationship between driving wheel axles and power conversion devices in an all-wheel driven type of the electric moving body according to the third embodiment.
[FIG. 19] FIG. 19 is a diagram illustrating a configuration of a management device according to the third embodiment.
[FIG. 20] FIG. 20 is a diagram illustrating an example of fixed information in a storage unit according to the third embodiment.
[FIG. 21] FIG. 21 is a diagram illustrating an example of varying information in the storage unit according to the third embodiment.
[FIG. 22] FIG. 22 is a flowchart illustrating an example of a billing process of the management device according to the third embodiment.
[FIG. 23] FIG. 23 is a flowchart illustrating a process in a normal charging mode of the management device according to the third embodiment.
[FIG. 24] FIG. 24 is a flowchart illustrating a process in a quick charging mode of the management device according to the third embodiment.
[FIG. 25] FIG. 25 is a diagram illustrating an arrangement configuration example of a connection device according to the third embodiment.
[FIG. 26] FIG. 26 is a diagram illustrating a circuit configuration example of the connection device according to the third embodiment.
[FIG. 27A] FIG. 27A is a diagram illustrating a charging encouragement mode of the management device according to the third embodiment, and is an explanatory diagram illustrating surplus power of renewable energy.
[FIG. 27B] FIG. 27B is a diagram illustrating the charging encouragement mode of the management device according to the third embodiment, and is a diagram illustrating a specific example of the charging encouragement mode.
[FIG. 28] FIG. 28 is a flowchart illustrating a process in the charging encouragement mode of the management device according to the third embodiment.
[FIG. 29] FIG. 29 is a diagram illustrating an energy management system (EMS) using the electric moving body charging system according to the third embodiment.
[FIG. 30] FIG. 30 is a diagram illustrating another configuration of a management area including power feeding spots according to the third embodiment.

### Description of Embodiments

Embodiments for carrying out the present invention will be described in detail with reference to the appropriate drawings. It is noted that Embodiments 1 and 3 are not encompassed by the wording of the claims but are considered as useful for understanding the invention.

### <<First Embodiments

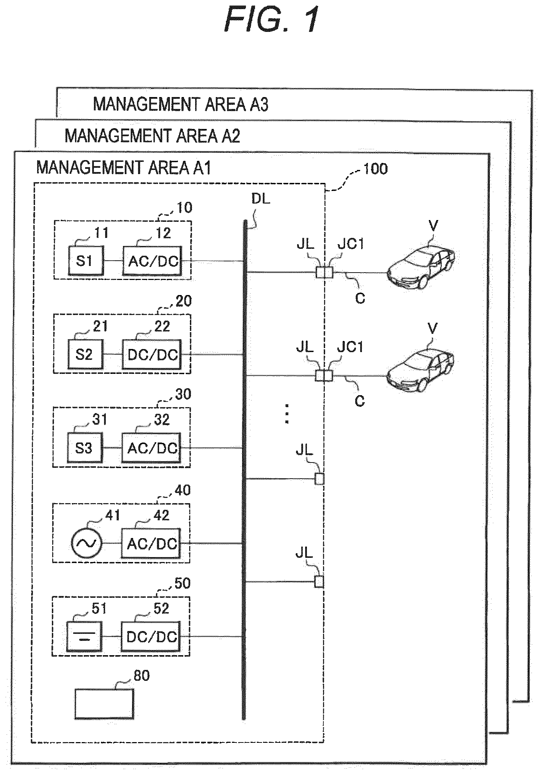

FIG. 1 is a diagram illustrating a configuration of an electric moving body charging system 100 (DC power supply facility) in a management area A1 according to a first embodiment. In order to supply power to a specific management area A1, the electric moving body charging system 100 includes one or more first power generation facilities 10, which are power generation facilities using wind as renewable energy, one or more second power generation facilities 20, which are power generation facilities using sunlight as renewable energy, one or more third power generation facilities 30 generating power by operating heat engines, a supply facility 40 from an AC system of a commercial power system 41, a power accumulation facility 50 accumulating and discharging surplus power from the first power generation facilities 10, the second power generation facilities 20, and the third power generation facilities 30, and a management device 80 controlling an amount of power supply to the management area A1.

The first power generation facility 10 is connected to a DC power supply bus DL after AC power from a wind power generator 11 is converted into DC power having a predetermined voltage by a power converter 12. Similarly, the second power generation facility 20 is connected to the DC power supply bus DL after DC power from a solar power generator 21 is converted into DC power having a predetermined voltage by a power converter 22. The third power generation facility 30 is connected to the DC power supply bus DL after AC power from a power generator 31 generating power by operating a heat engine is converted into DC power having a predetermined voltage by a power converter 32. The supply facility 40 is connected to the DC power supply bus DL after AC power from the commercial power system 41 is converted into DC power having a predetermined voltage by a power converter 42. The power accumulation facility 50 is connected to the DC power supply bus DL after DC power from a power accumulation device 51 is converted by a power converter 52.

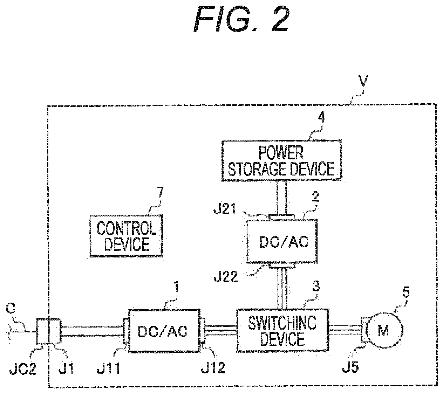

The DC power supply bus DL includes one or more output connection units JL (power feeding spots) for supplying power to electric moving bodies V. The power is supplied to the electric moving body V via a cable C having connection units JC1 and JC2 (see FIG. 2) at both ends thereof, respectively.

The third power generation facility 30 is a power generation facility including, for example, a wood gasification-based power generator, a liquefied natural gas-based power generator, a biogas-based power generator, a gasoline engine, a diesel engine, a gas engine, a kerosene engine, a rotary engine, a gas turbine, or the like. The wood gasification-based power generator generates power using thinned wood planned to be discarded or the like, and thus, is advantage in that cost reduction is promoted in the electric moving body charging system 100.

The configurations of the first power generation facility 10 and the second power generation facility 20 are not particularly limited, but the first power generation facility 10 and the second power generation facility 20 are preferably generators using renewable energy, and the third power generation facility 30 is preferably a private generator with low power generation cost.

In the first embodiment, since the 20-year period defined in the agreement under the Feed-in-Tariff (FIT) scheme for renewable energy, during which existing wind power generation facilities in management areas (territories) sell power to the power system, ends soon, it is promoted to operate the wind power generation facilities after the power-selling period ends. By operating the wind power generation facilities and the solar power generation facilities, it is possible to supply power within the territories without incurring fuel cost.

In addition, when an amount of power generated by the wind power generation facilities and the solar power generation facilities is insufficient with respect to a required load, for example, the wood gasification-based power generator can perform a reheating operation to increase a power generation output and additionally supply power.

FIG. 2 is a diagram illustrating a configuration of the electric moving body V according to the first embodiment. The electric moving body V is an electric moving body that travels when a driving electric device 5 is driven to be rotated by supplying power thereto. The electric moving body V includes a first power conversion device 1 receiving DC power from the outside and converting the DC power into AC power, a power storage device 4 storing power and supplying power required for driving the driving electric device 5 to be rotated, a second power conversion device 2 converting DC power from the power storage device 4 into AC power, and a power reception switching device 3 disposed at a middle position between the second power conversion device 2, the first power conversion device 1, and the driving electric device 5, and selectively connecting either the first power conversion device 1 or the driving electric device 5 to the second power conversion device 2.

The power reception switching device 3 selects the driving electric device 5 when the electric moving body V travels such that the driving electric device 5 is connected to the power storage device 4 via the second power conversion device 2, and selects the first power conversion device 1 when the electric moving body V does not travel such that the first power conversion device 1 is connected to the power storage device 4 via the second power conversion device 2.

That is, when the electric moving body V travels, the power reception switching device 3 selects the driving electric device 5, such that DC power output from the power storage device 4 is converted into AC power by the second power conversion device 2, and the AC power is supplied to the driving electric device 5. When the electric moving body V does not travel, the power reception switching device 3 selects the first power conversion device 1, such that AC power into which DC power received from a device prepared DC power supply device (the electric moving body charging system 100 (DC power supply facility) in the first embodiment) has been converted by the first power conversion device 1 is supplied to the second power conversion device 2 to be converted into DC power, and the DC power is supplied to the power storage device 4 for power charging.

The configuration of FIG. 2 will be described in more detail.

The electric moving body V includes a first receiving connection unit J1 (power receiving connection unit) receiving DC power from the outside, a first power conversion device 1 converting the DC power received from the first receiving connection unit J1 via a first connection unit J11 into AC power, a power storage device 4 generating driving power for driving the driving electric device 5 to be rotated to cause the electric moving body V to travel, a second power conversion device 2 converting DC power supplied from the power storage device 4 via a first connection unit J21 into AC power, and a power reception switching device 3 (switching device) selectively connecting either a second connection unit J12 of the first power conversion device 1 or a connection unit J5 of the driving electric device 5 to a second connection unit J22 of the second power conversion device 2.

The electric moving body V includes a control device 7. When the control device 7 detects that the prepared DC power supply device (e.g. electric moving body charging system 100) has been connected to the first receiving connection unit J1, the electric moving body V is in a power receiving state. The electric moving body V has a charging mode or a traveling mode. In the power receiving state, the electric moving body V is in the charging mode in which the second connection unit J12 of the first power conversion device 1 is connected to the second connection unit J22 of the second power conversion device 2 by the power reception switching device 3, such that the received DC power is converted into AC power by the first power conversion device 1, and the AC power is converted into DC power through the second power conversion device 2 to be supplied to the power storage device 4 for power charging. In the non-power receiving state, the electric moving body V is in the traveling mode in which the connection unit J5 of the driving electric device 5 is connected to the second connection unit J22 of the second power conversion device 2 by the power reception switching device 3, such that DC power supplied from the power storage device 4 is converted into AC power through the second power conversion device 2 and the AC power is supplied to the driving electric device 5.

In addition, the electric moving body V may include a regenerative braking device (not illustrated), such that when the output of the power storage device 4 is suppressed in the traveling mode, power generated by the driving electric device 5 is supplied to the power storage device 4 via the second power conversion device 2 to charge the power storage device 4.

In the electric moving body V of the first embodiment, the power storage device 4 can be charged by receiving power having a relatively low voltage (e.g., DC 200 V) from the DC power supply bus DL via the cable C, converting the power into AC power by the first power conversion device 1 as a DC-AC converter (also referred to as a DC-AC inverter), and converting the AC power into DC power having a high voltage (e.g., DC 360 to 400 V) by the second power conversion device 2 as an AC-DC converter. Conventionally, it has been necessary to arrange a relatively expensive quick charging device in a territory. However, in the first embodiment, the first power conversion device 1 (DC-AC converter) and the power reception switching device 3 are arranged in the electric moving body V to enable power charging, although not quickly. In addition, if a large number of output connection units JL (connection units) (see FIG. 1), which are power feeding spots, are provided in the territory, the electric moving body V can be charged in any output connection unit JL.

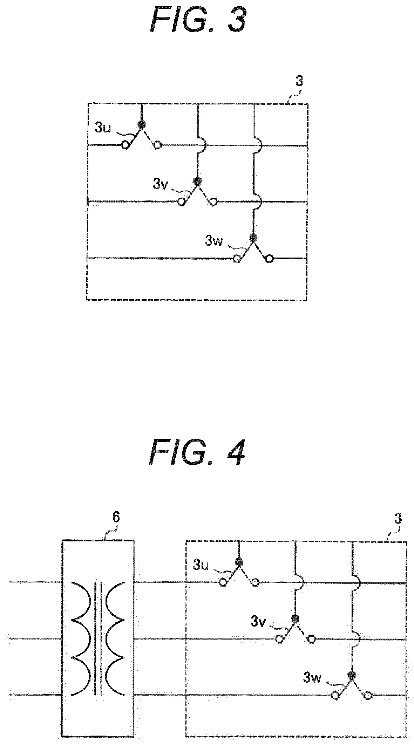

FIG. 3 is a diagram illustrating a configuration of the power reception switching device 3 according to the first embodiment. FIG. 2 will be appropriately referred to. The power reception switching device 3 is a three-phase switching device. In the power receiving state, changeover switches 3u, 3v, and 3w connect the first power conversion device 1 to the second power conversion device 2 (see unbroken lines). In the non-power receiving state, the changeover switches 3u, 3v, and 3w connect the driving electric device 5 to the second power conversion device 2 (see broken lines).

FIG. 4 is a diagram illustrating a configuration of an electrical insulation device 6 according to the first embodiment. FIG. 2 will be appropriately referred to. In the CHAdeMO standard (registered trademark), which is a conventional automotive quick charging standard, it is obligatory to insulate an electric vehicle from a system power supply (commercial power supply). In order to form a structure similar thereto, in FIG. 4, the electrical insulation device 6 is disposed between the first power conversion device 1 and the second power conversion device 2. The electrical insulation device 6 is, for example, an insulation voltage transformer.

That is, the electrical insulation device is disposed at a middle position between the power reception switching device 3 and the second connection unit J12 of the first power conversion device 1 to electrically insulate the first power conversion device 1 and the second power conversion device 2 from each other when the second connection unit J12 of the first power conversion device 1 and the second connection unit J22 of the second power conversion device 2 are connected to each other.

### (Modified Example)

The single DC power supply bus DL is illustrated in the embodiment of FIG. 1, but the present invention is not limited thereto. The DC power supply bus DL may be branched into the management areas.

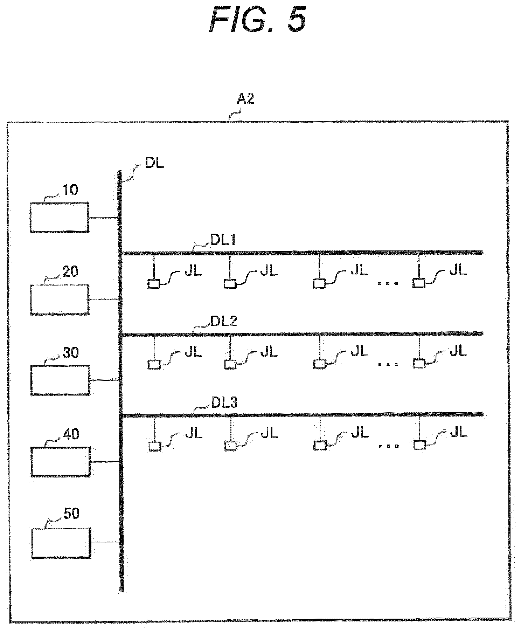

FIG. 5 is a diagram illustrating a configuration of a management area A2 including power feeding spots according to the first embodiment. It is illustrated in FIG. 5 that a large number of power feeding spots are provided at branch DC buses in the management area A2. In the management area A2, the DC power supply bus DL is branched into branch DC buses DL1, DL2, and DL3. Each of the branch DC buses DL1, DL2, and DL3 has a plurality of output connection units JL (power feeding spots). The electric moving body V can be charged at any time in any output connection unit JL.

In a case where the management area A2 is a predetermined municipality, if the branch DC buses DL1, DL2, DL3, and the like are arranged using power cables, an electric moving body V registered in advance can be charged in an output connection unit JL (power feeding spot) close thereto without having to move to a location of a charging device. In addition, the electric moving body V can be charged in an output connection unit JL close thereto even in a case where its charge capacity has decreased.

When the management area A2 includes production factories, the branch DC buses DL1, DL2, DL3, and the like may be arranged in the respective production factories using power cables. In the embodiment illustrated in FIG. 1, an electric vehicle or the like is illustrated as the electric moving body V, but the electric moving body V is not limited thereto. The electric moving body V may be a battery-type forklift or the like arranged in the factory.

In addition, it goes without saying that the third power generation facility 30 is excellent in cost performance, given its transportation cost and the like, as long as it is a wood gasification-based power generator using thinned wood or the like in a territory to be originally discarded, as compared with a power generator using natural gas or petroleum, which is an imported product, as a fuel.

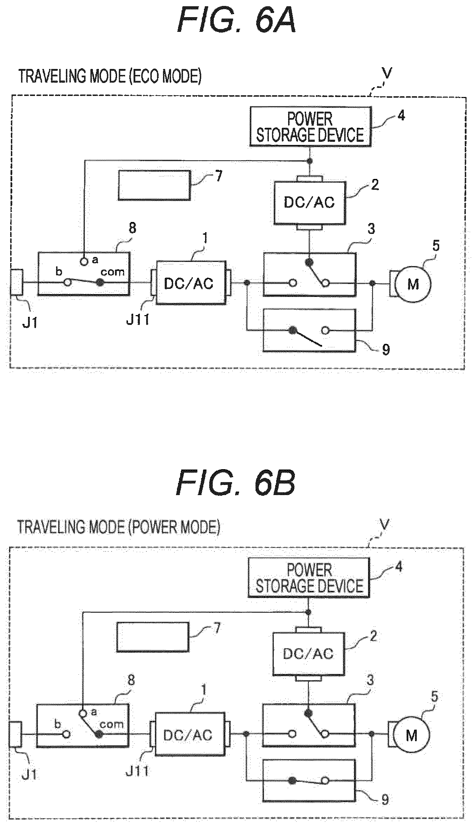

FIG. 6A is a diagram illustrating another configuration of the electric moving body V according to the first embodiment, representing an eco mode as the traveling mode. FIG. 6B is a diagram illustrating another configuration of the electric moving body V according to the first embodiment, representing a power mode. Referring to FIG. 6A, a configuration in which power can be supplied from the first power conversion device 1 and the second power conversion device 2 to the driving electric device 5 in the traveling mode will be described. In FIGS. 6A and 6B, a circuit is schematically illustrated by wiring in a single line.

A first switch 8 (C-contact switch) and a second switch 9 (A-contact switch) are added in FIG. 6A as compared with FIG. 2. The first switch 8 is disposed between the first receiving connection unit J1 and the first power conversion device 1. The second switch 9 (A-contact switch) is disposed between the first power conversion device 1 and the driving electric device 5, and is normally in an opened (OFF) state.

The first switch 8 is provided with a common terminal (COM: common) connected to the first connection unit J11 of the first power conversion device 1, an a-contact terminal (NO: normally opened) disposed on a side facing an output unit of the power storage device 4, and a b-contact terminal (NC: normally closed) disposed on a side facing the first receiving connection unit J1.

In the eco-mode of FIG. 6A, the first switch 8 is connected to the b-contact terminal, and furthermore, the second switch 9 is opened (OFF). The driving electric device 5 is supplied only with AC power supplied via the second power conversion device 2.

In the power mode of FIG. 6B, the first switch 8 is connected to the a-contact terminal to input an output from the power storage device 4 to the first power conversion device 1, and furthermore, the second switch 9 is closed (ON) to supply AC power from the first power conversion device 1 to the driving electric device 5. Accordingly, in the power mode, both the AC power of the first power conversion device 1 and the AC power of the second power conversion device 2 are supplied to the driving electric device 5. Note that the phases of the AC power supplied from the first power conversion device 1 and the second power conversion device 2 to the driving electric device 5 are synchronized with each other.

The electric moving body charging system 100 according to the first embodiment makes it possible that a management area is supplied with power preferentially by an existing renewable energy generator (e.g., wind power generator) that does not require fuel cost, and when power is insufficient, the management area is additionally supplied with power by another power generator (e.g., wood gasification-based power generator) that requires fuel. Accordingly, power can be stably supplied to the electric moving bodies V or the like while reducing cost.

### <<Second Embodiment>>

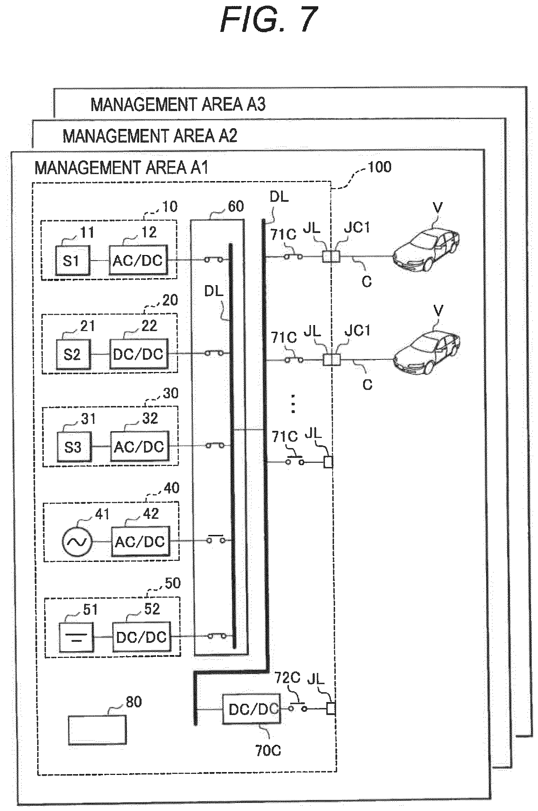

FIG. 7 is a diagram illustrating a configuration of an electric moving body charging system 100 in a management area A1 according to a second embodiment. In order to supply power to a specific management area A1, the electric moving body charging system 100 includes one or more first power generation facilities 10, which are power generation facilities using wind as renewable energy, one or more second power generation facilities 20, which are power generation facilities using sunlight as renewable energy, one or more third power generation facilities 30 generating power by operating heat engines, a supply facility 40 from an AC system of a commercial power system 41, a power accumulation facility 50 accumulating and discharging surplus power from the first power generation facilities 10, the second power generation facilities 20, and the third power generation facilities 30, a power supply connection device 60 physically connecting output units of DC power supply devices to the same power line (DC power supply bus DL) to configure a DC power supply bus DL, a first connection device 71C physically connecting an electric moving body V to the DC power supply bus DL, and a management device 80 controlling an amount of power supply to the management area A1.

The first power generation facility 10 is connected to a DC power supply bus DL after AC power from a wind power generator 11 is converted into DC power having a predetermined voltage by a power converter 12. Similarly, the second power generation facility 20 is connected to the DC power supply bus DL after DC power from a solar power generator 21 is converted into DC power having a predetermined voltage by a power converter 22. The third power generation facility 30 is connected to the DC power supply bus DL after AC power from a power generator 31 generating power by operating a heat engine is converted into DC power having a predetermined voltage by a power converter 32. The supply facility 40 is connected to the DC power supply bus DL after AC power from the commercial power system 41 is converted into DC power having a predetermined voltage by a power converter 42. The power accumulation facility 50 is connected to the DC power supply bus DL after DC power from a power accumulation device 51 is converted by a power converter 52. Note that in FIG. 7, the supply facility 40 is disconnected from the DC power supply bus DL because there is no demand for power toward the system.

The electric moving body charging system 100 further includes a second connection device 72C physically connecting an electric moving body V to the DC power supply bus DL, and a quick charging power converter 70C disposed between the DC power supply bus DL and the second connection device 72C.

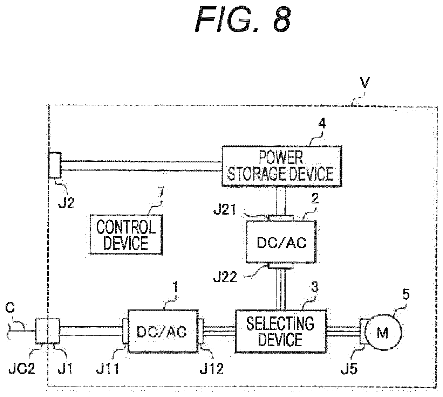

The DC power supply bus DL includes one or more output connection units JL (power feeding spots) for supplying power to an electric moving body V via the first connection device 71C or the second connection device 72C. The power is supplied to the electric moving body V via a cable C having connection units JC1 and JC2 (see FIG. 8) at both ends thereof, respectively. In a state where the cable C is not connected to the electric moving body V, the first connection device 71C and the second connection device 72C are disconnected.

The third power generation facility 30 is a power generation facility including, for example, a wood gasification-based power generator, a liquefied natural gas-based power generator, a biogas-based power generator, a gasoline engine, a diesel engine, a gas engine, a kerosene engine, a rotary engine, a gas turbine, or the like. The wood gasification-based power generator generates power using thinned wood planned to be discarded or the like, and thus, is advantage in that cost reduction is promoted in the electric moving body charging system 100.

The configurations of the first power generation facility 10 and the second power generation facility 20 are not particularly limited, but the first power generation facility 10 and the second power generation facility 20 are preferably generators using renewable energy, and the third power generation facility 30 is preferably a private generator with low power generation cost.

In the second embodiment, since the 20-year period defined in the agreement under the Feed-in-Tariff (FIT) scheme for renewable energy, during which existing wind power generation facilities in management areas (territories) sell power to the power system, ends soon, it is promoted to operate the wind power generation facilities after the power-selling period ends. By operating the wind power generation facilities and the solar power generation facilities, it is possible to supply power within the territories without incurring fuel cost.

In addition, when an amount of power generated by the wind power generation facilities and the solar power generation facilities is insufficient with respect to a required load, for example, the wood gasification-based power generator can perform a reheating operation to increase a power generation output and additionally supply power.

The management device 80 selects a normal charging mode when the electric moving body V is physically connected to the DC power supply bus DL via the first connection device 71C, acquires identification information given in advance to the electric moving body V, sets a non-traveling mode to the electric moving body V when it is determined that the identification information matches registration information allowing electrical connection to the DC power supply bus DL, supplies a required amount of DC power from the DC power supply bus DL to the electric moving body V to charge the power storage device 4 (see FIG. 8) mounted on the electric moving body V, cancels the non-traveling mode when the required amount of DC power has been supplied to the electric moving body V, and disconnects the electric moving body V from the DC power supply bus DL.

In addition, the management device 80 selects a quick charging mode when the electric moving body V is physically connected to the quick charging power converter 70C via the second connection device 72C, acquires identification information, sets a non-traveling mode to the electric moving body V when it is determined that the identification information matches registration information allowing electrical connection to the quick charging power converter 70C, supplies to the electric moving body V a required amount of large-capacity DC power with a higher voltage supplied from the DC power supply bus DL via the quick charging power converter 70C to charge the power storage device 4 (see FIG. 8) mounted on the electric moving body V, cancels the non-traveling mode when the required amount of DC power has been supplied to the electric moving body V, and disconnects the electric moving body V from the DC power supply bus DL.

FIG. 8 is a diagram illustrating a configuration of the electric moving body V according to the second embodiment. The electric moving body V is an electric moving body that travels when a driving electric device 5 is driven to be rotated by supplying power thereto. The electric moving body V includes a first receiving connection unit J1 receiving DC power from the outside, a first power conversion device 1 receiving the DC power from the first receiving connection unit J1 and converting the DC power into AC power, a power storage device 4 storing power and supplying power required for driving the driving electric device 5 to be rotated, a second power conversion device 2 converting DC power from the power storage device 4 into AC power, a power reception switching device 3 (selection device) disposed at a middle position between the second power conversion device 2, the first power conversion device 1, and the driving electric device 5, and selectively connecting either the first power conversion device 1 or the driving electric device 5 to the second power conversion device 2, and a control device 7 controlling the first power conversion device 1, the second power conversion device 2, and the like. The electric moving body V includes a second receiving connection unit J2 directly connected to the power storage device 4.

The power reception switching device 3 selects the driving electric device 5 when the electric moving body V travels such that the driving electric device 5 is connected to the power storage device 4 via the second power conversion device 2, and selects the first power conversion device 1 when the electric moving body V does not travel such that the first power conversion device 1 is connected to the power storage device 4 via the second power conversion device 2.

In addition, when the electric moving body V travels, the power reception switching device 3 selects the driving electric device 5, such that DC power output from the power storage device 4 is converted into AC power by the second power conversion device 2, and the AC power is supplied to the driving electric device 5. When the electric moving body V does not travel, the power reception switching device 3 selects the first power conversion device 1, such that AC power into which DC power received from a prepared DC power supply device (the electric moving body charging system 100 in the second embodiment) has been converted by the first power conversion device 1 is supplied to the second power conversion device 2 to be converted into DC power, and the DC power is supplied to the power storage device 4 for power charging.

The configuration of FIG. 8 will be described in more detail. The electric moving body V includes a first receiving connection unit J1 receiving DC power from the outside, a first power conversion device 1 converting the DC power received from the first receiving connection unit J1 via a first connection unit J11 into AC power, a power storage device 4 generating driving power for driving the driving electric device 5 to be rotated to cause the electric moving body V to travel, a second power conversion device 2 converting DC power supplied from the power storage device 4 via a first connection unit J21 into AC power, and a power reception switching device 3 selectively connecting either a second connection unit J12 of the first power conversion device 1 or a connection unit J5 of the driving electric device 5 to a second connection unit J22 of the second power conversion device 2.

In the non-traveling mode, when the first receiving connection unit J1 is physically connected to the DC power supply bus DL via the first connection device 71C, the electric moving body V transmits identification information to the management device 80. At this time, DC power received from the DC power supply bus DL via the first receiving connection unit J1 is converted into AC power by the first power conversion device 1, and the AC power is supplied to the second power conversion device 2 to be converted into DC power, such that the DC power is supplied to the power storage device 4 for power charging, from establishment of electrical connection between the first receiving connection unit J1 and the DC power supply bus DL until the first receiving connection unit J1 and the DC power supply bus DL are disconnected from each other.

In addition, in the non-traveling mode, in a case where the second receiving connection unit J2 is physically connected to the quick charging power converter 70C via the second connection device 72C, the electric moving body V transmits identification information to the management device 80. At this time, DC power received from the quick charging power converter 70C via the second receiving connection unit J2 is supplied to the power storage device 4 for power charging, from establishment of electrical connection between the second receiving connection unit J2 and the quick charging power converter 70C until the second receiving connection unit J2 and the quick charging power converter 70C are disconnected from each other.

When the non-traveling mode is canceled, the electric moving body V shifts to the traveling mode in which DC power output from the power storage device 4 is supplied to the second power conversion device 2 to convert the DC power into AC power, and the AC power is supplied to the driving electric device 5.

In addition, the electric moving body V may include a regenerative braking device (not illustrated), such that when the output of the power storage device 4 is suppressed in the traveling mode, power generated by the driving electric device 5 is supplied to the power storage device 4 via the second power conversion device 2 to charge the power storage device 4.

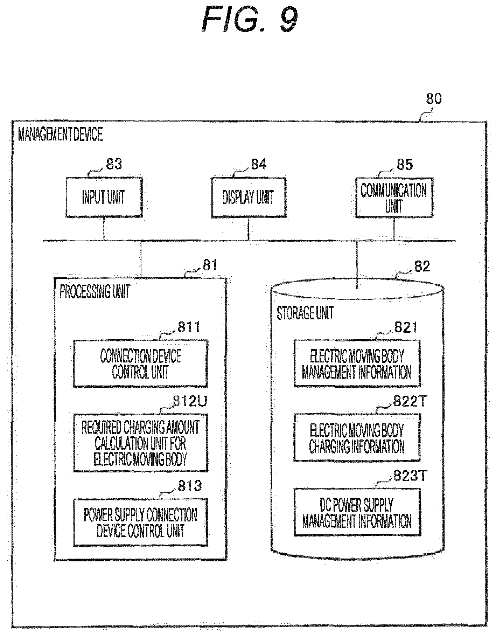

FIG. 9 is a diagram illustrating a configuration of the management device 80 according to the second embodiment. The management device 80 includes a processing unit 81, a storage unit 82, an input unit 83, a display unit 84, and a communication unit 85. The processing unit 81 is a central processing unit (CPU), and includes a connection device control unit 811 (first/second connection device control units) controlling the first connection devices 71C and the second connection device 72C, a required charging amount calculation unit 812U for the electric moving body calculating a charging amount required by the electric moving body V, a power supply connection device control unit 813 controlling the power supply connection device 60 to select a power supply corresponding to a required capacity, and the like.

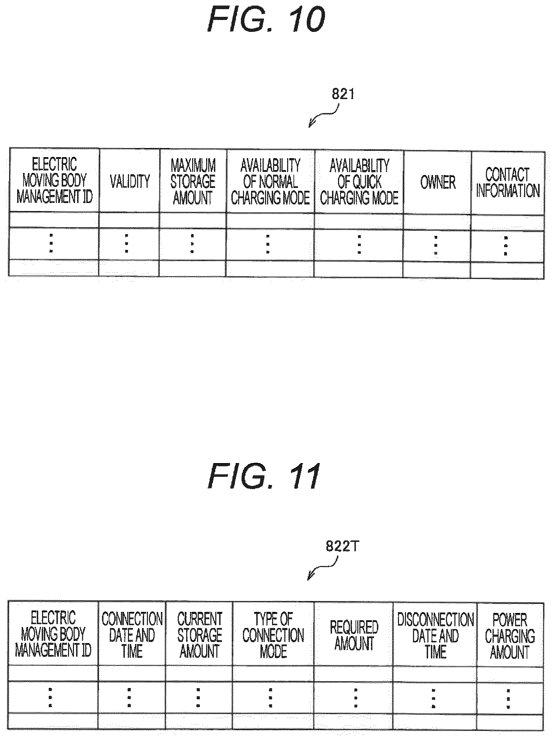

The storage unit 82 stores electric moving body management information 821 (see FIG. 10) which is information for managing electric moving bodies V, electric moving body charging information 822T (see FIG. 11) which indicates charged states of the electric moving bodies V, DC power supply management information 823T which is information for managing DC power supplies, and the like.

The input unit 83 is a device for inputting an instruction to a computer, such as a keyboard or a mouse, and inputs an instruction for activating a program or the like. The display unit 84 is a display or the like, and displays an execution status, an execution result, and the like of processing by the management device 80. The communication unit 85 exchanges various data and commands with other devices via a network or the like.

FIG. 10 is a diagram illustrating an example of the electric moving body management information 821 in the storage unit 82 according to the second embodiment. The electric moving body management information 821 includes an electric moving body management ID (identification information), validity information indicating whether or not the identification information is valid, a maximum storage amount of a power storage device 4 of an electric moving body V, normal charging mode availability information indicating whether or not the normal charging mode is available, quick charging mode availability information indicating whether or not the quick charging mode is available, information on an owner of the electric moving body V, contact information of the owner, and the like.

FIG. 11 is a diagram illustrating an example of the electric moving body charging information 822T in the storage unit 82 according to the second embodiment. The electric moving body charging information 822T includes an electric moving body management ID (identification information), a date and time on/at an electric moving body V is connected, a connection mode type between the normal charging mode or the quick charging mode, a current power storage amount of the electric moving body V eligible for connection, a required amount (= maximum storage amount - current storage amount) calculated by the required charging amount calculation unit 812U for electric moving body, a date and time on/at the electric moving body V is disconnected, an amount of charging until the disconnection, and the like.

The required charging amount calculation unit 812U for electric moving body also calculates a charging amount when the electric moving body V is disconnected. Accordingly, an accumulated charging amount can be calculated for each electric moving body management ID, and an owner corresponding to the electric moving body management ID can be billed for an expense incurred for accumulated charging amount, for example, at the end of month.

In addition, the required charging amount calculation unit 812U for electric moving body calculates required charging amounts of connected electric moving bodies V every predetermined time interval, and for example, calculates a total every hour as a total value of required amounts (total required amount value) of the respective electric moving bodies V. The total value of the required amounts is a value used for determination when a DC power supply device is selected, which will be described later.

FIG. 3 is a diagram illustrating a configuration of the power reception switching device 3 according to the second embodiment. The power reception switching device 3 is a three-phase switching device. In the power receiving state, changeover switches 3u, 3v, and 3w connect the first power conversion device 1 to the second power conversion device 2 (see unbroken lines). In the non-power receiving state, the changeover switches 3u, 3v, and 3w connect the driving electric device 5 to the second power conversion device 2 (see broken lines).

FIG. 4 is a diagram illustrating a configuration of an electrical insulation device 6 according to the second embodiment. FIG. 8 will be appropriately referred to. In the CHAdeMO standard (registered trademark), which is a conventional automotive quick charging standard, it is obligatory to insulate an electric vehicle from a system power supply (commercial power supply). In order to form a structure similar thereto, in FIG. 4, the electrical insulation device 6 is disposed between the first power conversion device 1 and the second power conversion device 2. The electrical insulation device 6 is, for example, an insulation voltage transformer.

That is, the electrical insulation device 6 is disposed at a middle position between the power reception switching device 3 and the second connection unit J12 of the first power conversion device 1 to electrically insulate the first power conversion device 1 and the second power conversion device 2 from each other when the second connection unit J12 of the first power conversion device 1 and the second connection unit J22 of the second power conversion device 2 are connected to each other

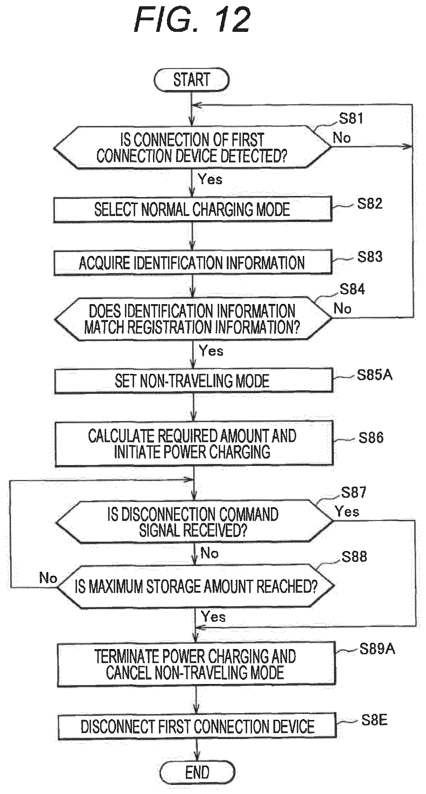

FIG. 12 is a flowchart illustrating an example of the processing unit 81 of the management device 80 according to the second embodiment. FIGS. 7 to 9 will be appropriately referred to. The processing unit 81 determines whether or not connection of the first connection device 71C has been detected (step S81). When the connection of the first connection device 71C has been detected (step S81, Yes), the processing unit 81 selects a normal charging mode (step S82), and the process proceeds to step S83. When the connection of the first connection device 71C has not been detected (step S81, No), the process returns to step S81.

The processing unit 81 acquires an electric moving body management ID (identification information) from a connected electric moving body V in step S83, and determines whether or not the electric moving body management ID matches registration information with reference to the electric moving body management information 821 (step S84). When the electric moving body management ID matches the registration information (step S84, Yes), the process proceeds to step S85A. When the electric moving body management ID does not match the registration information (step S84, No), the processing unit 81 notifies the electric moving body V that it has not been registered, and the process returns to step S81.

The processing unit 81 sets a non-traveling mode in step S85A, and calculates a required charging amount and initiates power charging (step S86). After initiating the power charging, the processing unit 81 determines whether or not a disconnection command signal has been received from the electric moving body V (step S87). When the disconnection command signal has not been received (step S87, No), the process proceeds to step S88. When the disconnection command signal has been received (step S87, Yes), the process proceeds to step S89A.

In step S88, the processing unit 81 determines whether or not a maximum storage amount of the electric moving body V has been reached. When the maximum storage amount has been reached (step S88, Yes), the process proceeds to step S89A. When the maximum storage amount has not been reached (step S88, No), the process returns to step S87. In step S89A, the processing unit 81 terminates the power charging and cancels the non-traveling mode. Then, the processing unit 81 disconnects the first connection device 71C (step S8E), and ends the series of steps of the process.

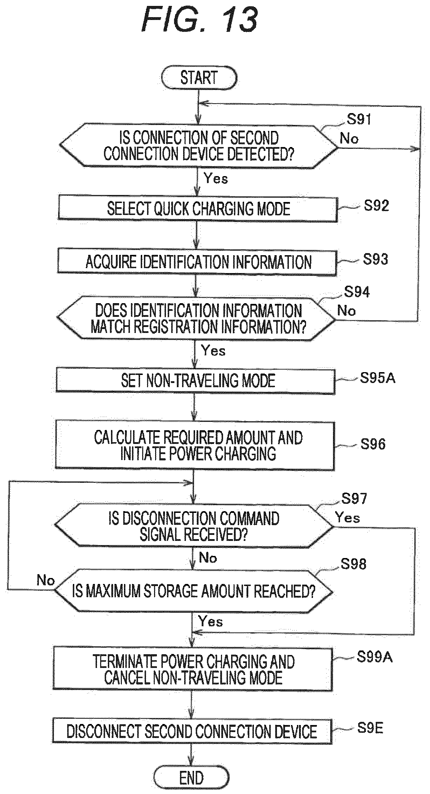

FIG. 13 is a flowchart illustrating another example of the processing unit 81 of the management device 80 according to the second embodiment. FIGS. 7 to 9 will be appropriately referred to. The processing unit 81 determines whether or not connection of the second connection device 72C has been detected (step S91). When the connection of the second connection device 72C has been detected (step S91, Yes), the processing unit 81 selects a quick charging mode (step S92), and the process proceeds to step S93. When the connection of the second connection device 72C has not been detected (step S91, No), the process returns to step S91.

The processing unit 81 acquires an electric moving body management ID (identification information) from a connected electric moving body V in step S93, and determines whether or not the electric moving body management ID matches registration information with reference to the electric moving body management information 821 (step S94). When the electric moving body management ID matches the registration information (step S94, Yes), the process proceeds to step S95A. When the electric moving body management ID does not match the registration information (step S94, No), the processing unit 81 notifies the electric moving body V that it has not been registered, and the process returns to step S91.

The processing unit 81 sets a non-traveling mode in step S95A, and calculates a required charging amount and initiates power charging (step S96). After initiating the power charging, the processing unit 81 determines whether or not a disconnection command signal has been received from the electric moving body V (step S97). When the disconnection command signal has not been received (step S97, No), the process proceeds to step S98. When the disconnection command signal has been received (step S97, Yes), the process proceeds to step S99A.

In step S98, the processing unit 81 determines whether or not a maximum storage amount of the electric moving body V has been reached. When the maximum storage amount has been reached (step S98, Yes), the process proceeds to step S99A. When the maximum storage amount has not been reached (step S98, No), the process returns to step S97. In step S99A, the processing unit 81 terminates the power charging and cancels the non-traveling mode. Then, the processing unit 81 disconnects the second connection device 72C (step S9E), and ends the series of steps of the process.

For the same identification information, the management device 80 does not set an electrical connection by the second connection device 72C while an electrical connection is established by the first connection device 71C, and does not set an electrical connection by the first connection device 71C while an electrical connection is established by the second connection device 72C. Accordingly, it is possible to avoid a charging mode being set in such a manner that the normal charging mode and the quick charging mode overlap with each other for the electric moving body V having the same identification information.

As described above, the management device 80 can set a required amount by calculating a difference between a maximum storage amount and a current storage amount of a power storage device 4 acquired from an electric moving body V in the non-traveling mode, the maximum storage amount of the power storage device 4 corresponding to the identification information having been stored in advance in the storage unit 82 in association with each other.

The management device 80 may calculate a total value of required amounts set for electric moving bodies V in which the non-traveling mode is set, select a required one from the DC power supply devices physically connected to the DC power supply bus DL according to the total value of the required amounts, and electrically connect the selected DC power supply device to the DC power supply bus DL. Accordingly, when the total required amount increases, the supply from the DC power supply can be increased, and when the total required amount decreases, the supply from the DC power supply can be decreased.

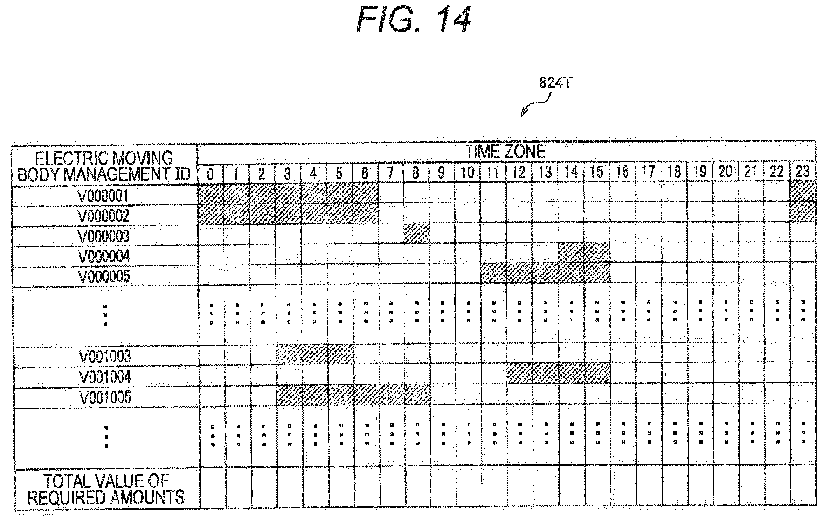

FIG. 14 is a diagram illustrating an example of required amount management information 824T for the management area A1 according to the second embodiment. The management device 80 manages a required amount per electric moving body management ID on an hourly basis. That is, in FIG. 14, the management device 80 manages a required amount (= maximum storage amount - current storage amount) illustrated in FIG. 11 on an hourly basis, and manages a total value as a total value of required amounts (total required amount value) on an hourly basis. Specifically, in a case where the electric moving body management IDs are "V000001" and "V000002"", the normal charging type is used, and 8-hour charging is required, and in a case where the electric moving body management ID is "V000003", the quick charging type is used, and charging is completed in one hour. In addition, in a case where the electric moving body management ID is "V000004", "V000005", "V001003", "V001004", or "V001005", charging is performed in the normal charging type for 2 hours, 5 hours, 3 hours, 4 hours, or 6 hours according to a required amount. Therefore, the management device 80 may select a required one from the DC power supply devices physically connected to the DC power supply bus DL according to a total value of required amounts after a predetermined time, and electrically connect the selected DC power supply device to the DC power supply bus DL. Note that, in FIG. 14, the total value of required amounts is calculated every hour, but may be calculated every 30 minutes.

The management device 80 manages a current storage amount for each identification information. When a value of the current storage amount reaches a corresponding maximum storage amount or when a disconnection command signal is received from a corresponding electric moving body V, the management device 80 can cancel the non-traveling mode of the electric moving body V and disconnect the electric moving body V from the DC power supply bus DL.

In the electric moving body V of the second embodiment, the power storage device 4 can be charged by receiving power having a relatively low voltage (e.g., DC 200 V) from the DC power supply bus DL via the cable C, converting the power into AC power by the first power conversion device 1 as a DC-AC converter (also referred to as a DC-AC inverter), and converting the AC power into DC power having a high voltage (e.g., DC 360 to 400 V) by the second power conversion device 2 as an AC-DC converter. Conventionally, it has been necessary to arrange a relatively expensive quick charging device in a territory. However, in the present invention, the first power conversion device 1 (DC-AC converter) and the power reception switching device 3 are arranged in the electric moving body V to enable power charging, although not quickly. In addition, if a large number of output connection units JL (see FIG. 7), which are power feeding spots, are provided in the territory, the electric moving body V can be charged in any output connection unit JL. When quick charging is required, charging can be performed through the second connection device 72C and the quick charging power converter 70C.

### (Modified Example)

The single DC power supply bus DL is illustrated in the embodiment of FIG. 7, but the present invention is not limited thereto. The DC power supply bus DL may be branched into the management areas.

FIG. 5 is a diagram illustrating a configuration of a management area A2 including power feeding spots according to the second embodiment. It is illustrated in FIG. 5 that a large number of power feeding spots are provided at branch DC buses in the management area A2. In the management area A2, the DC power supply bus DL is branched into branch DC buses DL1, DL2, and DL3. Each of the branch DC buses DL1, DL2, and DL3 has a plurality of output connection units JL. The electric moving body V can be charged at any time in any output connection unit JL (power feeding spot).

In a case where the management area A2 is a predetermined municipality, if the branch DC buses DL1, DL2, DL3, and the like are arranged using power cables, an electric moving body V registered in advance can be charged in an output connection unit JL (power feeding spot) close thereto without having to move to a location of a charging device. In addition, the electric moving body V can be charged in an output connection unit JL close thereto even in a case where its charge capacity has decreased.

When the management area A2 includes production factories, the branch DC buses DL1, DL2, DL3, and the like may be arranged in the respective production factories using power cables. In the embodiment illustrated in FIG. 7, an electric vehicle or the like is illustrated as the electric moving body V, but the electric moving body V is not limited thereto. The electric moving body V may be a battery-type forklift or the like arranged in the factory.

In addition, it goes without saying that the third power generation facility 30 is excellent in cost performance, given its transportation cost and the like, as long as it is a wood gasification-based power generator using thinned wood or the like in a territory to be originally discarded, as compared with a power generator using natural gas or petroleum, which is an imported product, as a fuel.

FIG. 6A is a diagram illustrating another configuration of the electric moving body V according to the second embodiment, representing an eco mode as the traveling mode. FIG. 6B is a diagram illustrating another configuration of the electric moving body V according to the second embodiment, representing a power mode. Referring to FIG. 6A, a configuration in which power can be supplied from the first power conversion device 1 and the second power conversion device 2 to the driving electric device 5 in the traveling mode will be described. In FIGS. 6A and 6B, a circuit is schematically illustrated by wiring in a single line.

A first switch 8 (C-contact switch) and a second switch 9 (A-contact switch) are added in FIGS. 6A and 6B as compared with FIG. 8. The first switch 8 is disposed between the first receiving connection unit J1 and the first power conversion device 1. The second switch 9 is disposed between the first power conversion device 1 and the driving electric device 5, and is normally in an opened (OFF) state.

The first switch 8 is provided with a common terminal (COM: common) connected to the first connection unit J11 of the first power conversion device 1, an a-contact terminal (NO: normally opened) disposed on a side facing an output unit of the power storage device 4, and a b-contact terminal (NC: normally closed) disposed on a side facing the first receiving connection unit J1.

In the eco-mode of FIG. 6A, the first switch 8 is connected to the b-contact terminal, and furthermore, the second switch 9 is opened (OFF). The driving electric device 5 is supplied only with AC power supplied via the second power conversion device 2.

In the power mode of FIG. 6B, the first switch 8 is connected to the a-contact terminal to input an output from the power storage device 4 to the first power conversion device 1, and furthermore, the second switch 9 is closed (ON) to supply AC power from the first power conversion device 1 to the driving electric device 5. Accordingly, in the power mode, both the AC power of the first power conversion device 1 and the AC power of the second power conversion device 2 are supplied to the driving electric device 5. Note that the phases of the AC power supplied from the first power conversion device 1 and the second power conversion device 2 to the driving electric device 5 are synchronized with each other.

The electric moving body charging system 100 according to the second embodiment makes it possible that a management area is supplied with power preferentially by an existing renewable energy generator (e.g., wind power generator) that does not require fuel cost, and when power is insufficient, the management area is additionally supplied with power by another power generator (e.g., wood gasification-based power generator) that requires fuel. Accordingly, power can be stably supplied to the electric moving bodies V or the like while reducing cost.

### <<Third Embodiment>>

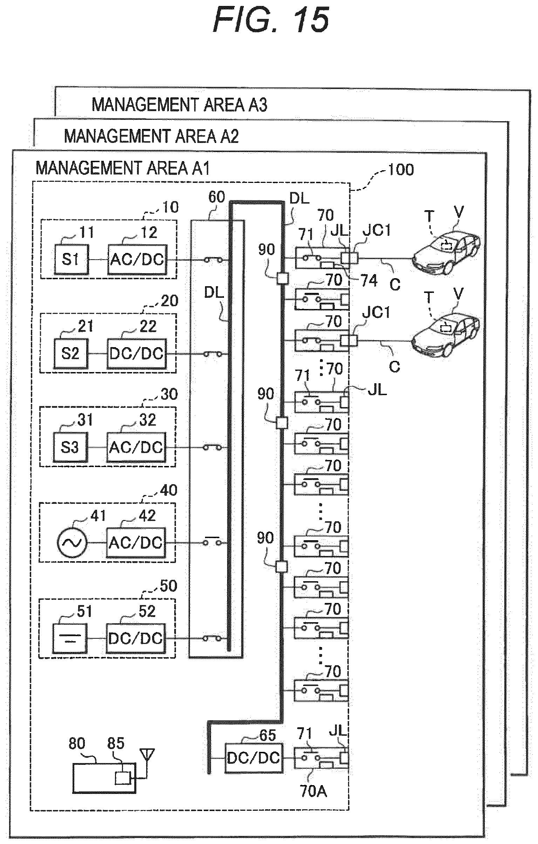

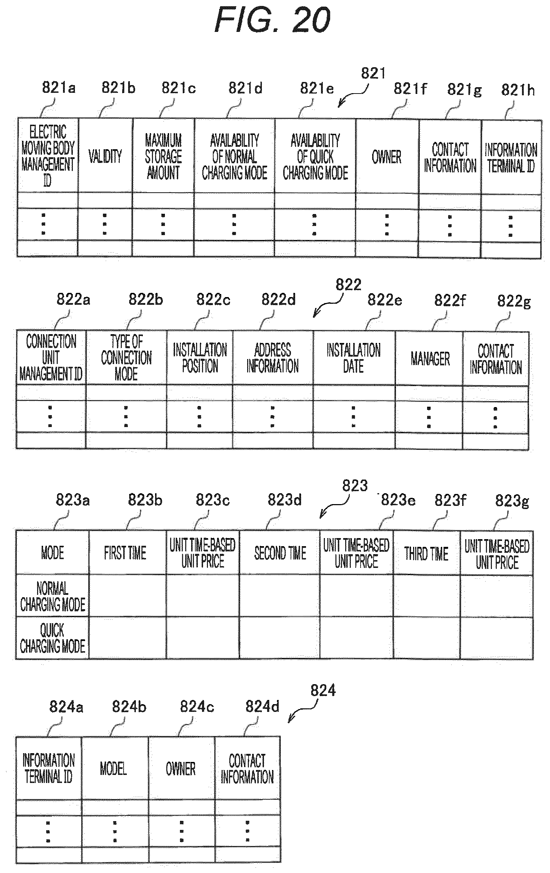

FIG. 15 is a diagram illustrating a configuration of an electric moving body charging system 100 in a management area A1 according to a third embodiment. The electric moving body charging system 100 is an electric moving body charging system for supplying DC power to an electric moving body V in the management area. A DC power supply bus DL is configured by a combination of an output of a power generation facility (e.g., a first power generation facility 10 or a second power generation facility 20) using natural energy with a power converter that outputs a predetermined DC voltage being provided in an output unit thereof, an output of an internal combustion-based power generation facility (e.g., a third power generation facility 30) with a power converter that outputs a predetermined DC voltage being provided in an output unit thereof, an output of a power accumulator (e.g., a power accumulation facility 50) with a power converter that outputs a predetermined DC voltage being provided in an output unit thereof, and an output of a power supply facility (e.g., a supply facility 40) with a power converter that outputs a predetermined DC voltage to a required power supply from a commercial power system. The electric moving body charging system 100 includes a management device 80, and the DC power can be supplied from the DC power supply bus DL to an electric moving body V whose identification information (electric moving body management ID 821a, see FIG. 20) given thereto is stored as registered identification information in the management device 80.

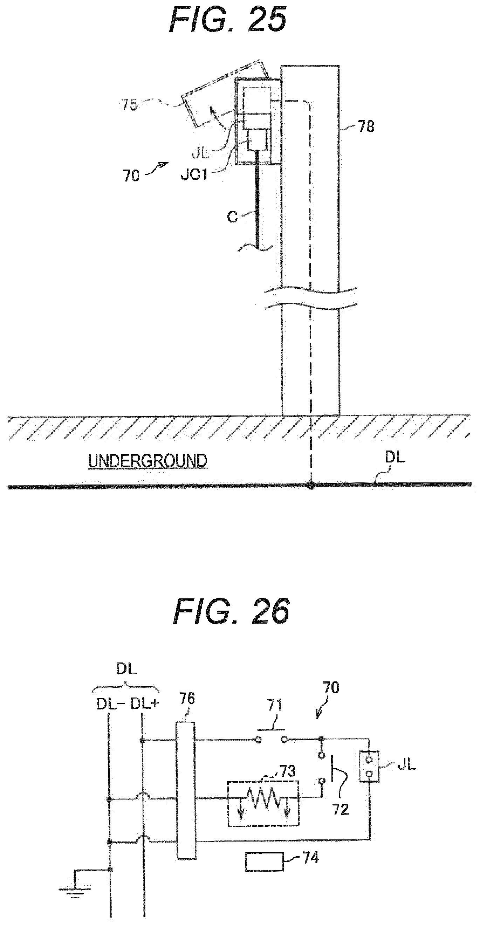

In order to supply power to the specific management area A1, the electric moving body charging system 100 includes one or more first power generation facilities 10, which are power generation facilities using wind as renewable energy, one or more second power generation facilities 20, which are power generation facilities using sunlight as renewable energy, one or more third power generation facilities 30 generating power by operating heat engines, a supply facility 40 from an AC system of a commercial power system 41, a power accumulation facility 50 accumulating and discharging surplus power from the first power generation facilities 10, the second power generation facilities 20, and the third power generation facilities 30, a power supply connection device 60 physically connecting output units of DC power supply devices to the same power line (DC power supply bus DL) to configure a DC power supply bus DL, a connection device 70 physically connecting an electric moving body V to the DC power supply bus DL, and a management device 80 controlling an amount of power supply to the management area A1. The connection device 70 includes an energization switch 71, an output connection unit JL (power feeding spot), and a control unit 74. Note that the connection device 70 will be described in detail later with reference to FIGS. 25 and 26.

The management area is a territory managed by one manager within a jurisdiction region of a local government, within a business place of a company, or the like, and is a territory that is not subject to any restriction from a third party in laying a DC power supply bus DL and registering an electric moving body V.

The first power generation facility 10 is connected to a DC power supply bus DL after AC power from a wind power generator 11 is converted into DC power having a predetermined voltage by a power converter 12. Similarly, the second power generation facility 20 is connected to the DC power supply bus DL after DC power from a solar power generator 21 is converted into DC power having a predetermined voltage by a power converter 22. The third power generation facility 30 is connected to the DC power supply bus DL after AC power from a power generator 31 generating power by operating a heat engine is converted into DC power having a predetermined voltage by a power converter 32. The supply facility 40 is connected to the DC power supply bus DL after AC power from the commercial power system 41 is converted into DC power having a predetermined voltage by a power converter 42. The power accumulation facility 50 is connected to the DC power supply bus DL after DC power from a power accumulation device 51 is converted by a power converter 52. Note that in FIG. 15, the supply facility 40 is disconnected from the DC power supply bus DL because there is no demand for power toward the system.

The electric moving body charging system 100 further includes a connection device 70A physically connecting an electric moving body V to the DC power supply bus DL, and a quick charging power converter 65 disposed between the DC power supply bus DL and the connection device 70A.

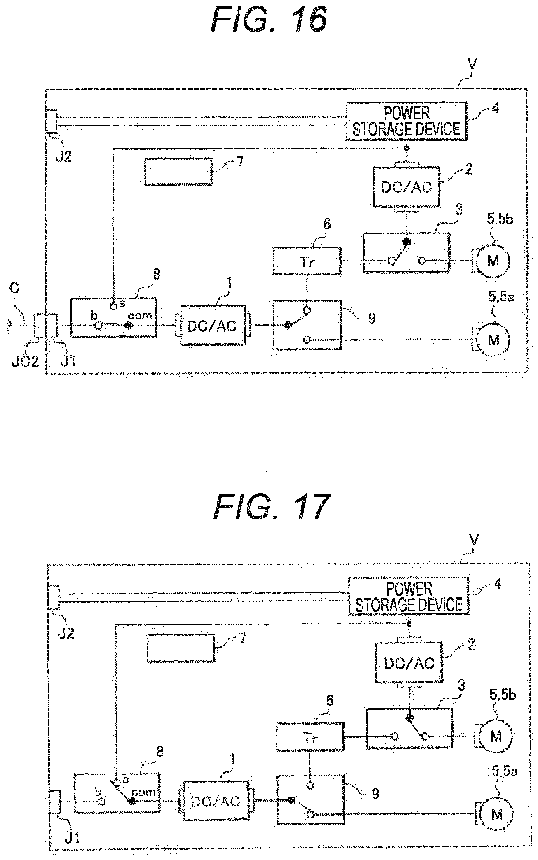

The DC power supply bus DL includes one or more output connection units JL (power feeding spots) for supplying power to electric moving bodies V via the connection devices 70 and 70A. The power is supplied to the electric moving body V via a cable C having connection units JC1 and JC2 (see FIG. 16) at both ends thereof, respectively. In a state where the cable C is not connected to the electric moving body V, the connection devices 70 and 70A are disconnected.

In addition, the DC power supply bus DL includes a voltage compensation device 90 compensating for a voltage drop at a predetermined position to supply a predetermined voltage to all the output connection units JL provided in the DC power supply bus DL.

The third power generation facility 30 is a power generation facility including, for example, a wood gasification-based power generator, a liquefied natural gas-based power generator, a biogas-based power generator, a gasoline engine, a diesel engine, a gas engine, a kerosene engine, a rotary engine, a gas turbine, or the like. The wood gasification-based power generator generates power using thinned wood planned to be discarded or the like, and thus, is advantage in that cost reduction is promoted in the electric moving body charging system 100.

The configurations of the first power generation facility 10 and the second power generation facility 20 are not particularly limited, but the first power generation facility 10 and the second power generation facility 20 are preferably generators using renewable energy, and the third power generation facility 30 is preferably a private generator with low power generation cost.

In the third embodiment, since the 20-year period defined in the agreement under the Feed-in-Tariff (FIT) scheme for renewable energy, during which existing wind power generation facilities in management areas (territories) sell power to the power system, ends soon, it is promoted to operate the wind power generation facilities after the power-selling period ends. By operating the wind power generation facilities and the solar power generation facilities, it is possible to supply power within the territories without incurring fuel cost.

In addition, when an amount of power generated by the wind power generation facilities and the solar power generation facilities is insufficient with respect to a required load, for example, the wood gasification-based power generator can perform a reheating operation to increase a power generation output and additionally supply power.

The management device 80 selects a normal charging mode when the electric moving body V is physically connected to the DC power supply bus DL via the connection device 70, acquires electric moving body identification information given in advance to the electric moving body V, sets a charging mode to the electric moving body V when it is determined that the electric moving body identification information matches registration information allowing electrical connection to the DC power supply bus DL, supplies a required amount of DC power from the DC power supply bus DL to the electric moving body V to charge the power storage device 4 (see FIG. 16) mounted on the electric moving body V, cancels the charging mode when the required amount of DC power has been supplied to the electric moving body V, and disconnects the electric moving body V from the DC power supply bus DL.

In addition, the management device 80 selects a quick charging mode when the electric moving body V is physically connected to the quick charging power converter 65 via the connection device 70A, acquires electric moving body identification information, sets a charging mode to the electric moving body V when it is determined that the electric moving body identification information matches registration information allowing electrical connection to the quick charging power converter 65, supplies to the electric moving body V a required amount of large-capacity DC power with a higher voltage supplied from the DC power supply bus DL via the quick charging power converter 65 to charge the power storage device 4 (see FIG. 16) mounted on the electric moving body V, cancels the charging mode when the required amount of DC power has been supplied to the electric moving body V, and disconnects the electric moving body V from the DC power supply bus DL.

That is, electric moving body identification information given to the electric moving body V is acquired when the electric moving body V is physically connected to the output connection unit JL, it is determined based on the electric moving body identification information whether or not the electric moving body V is an electric moving body eligible for power feeding, the connection device 70 or 70A electrically connects the electric moving body V to the DC power supply bus DL when the electric moving body V is determined as an electric moving body eligible for power feeding, and DC power is supplied to the electric moving body V from the output connection unit JL until a chargeable capacity of the electric moving body V is reached or until the electric moving body V is disconnected from the output connection unit JL.

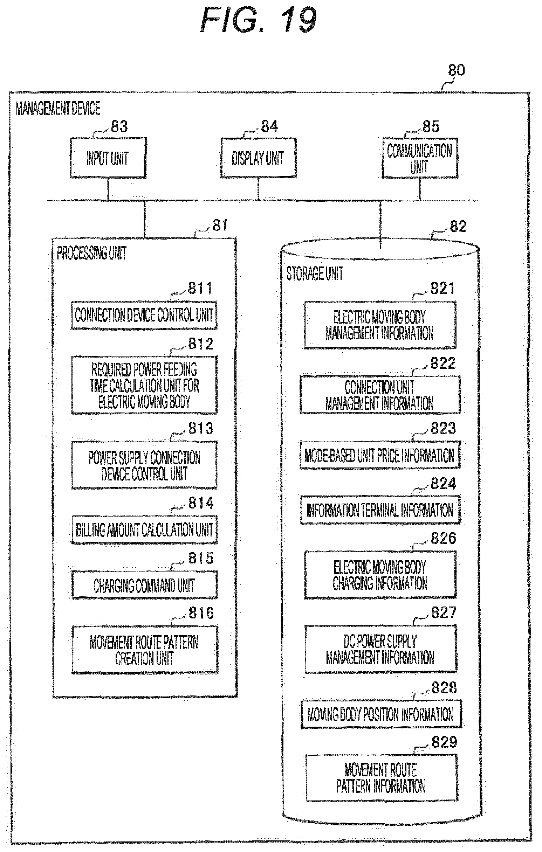

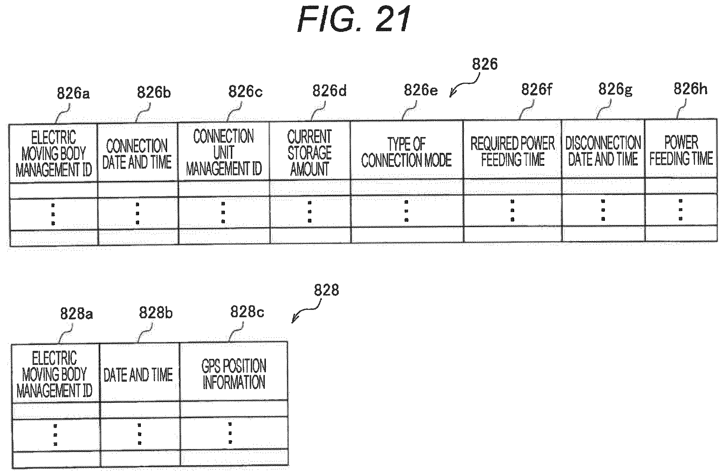

The management device 80 is connected to an information terminal T of a car navigation system or a mobile terminal having a communication function, which is linked to an electric moving body management ID 821a (registered identification information) (see FIG. 20), by a communication unit 85 (see FIG. 19) which is a wireless communication facility, and periodically acquires, updates, and stores registered identification information and current storage amount information (current storage amount 826d, see FIG. 21) indicating a current power storage amount of a power storage device arranged in an electric moving body V corresponding to each of the registered identification information through the wireless communication facility. Note that the information terminal T transmits and receives various types of information to and from the control device 7 (see FIG. 16) of the electric moving body V.

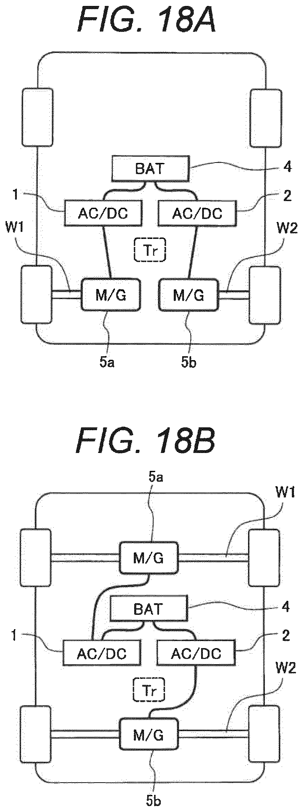

FIG. 16 is a diagram illustrating a configuration of the electric moving body V in a charging mode according to the third embodiment. FIG. 17 is a diagram illustrating a configuration of the electric moving body V in a traveling mode according to the third embodiment. FIG. 15 will be appropriately referred to. The electric moving body V is an electric moving body that travels when driving electric devices 5 provided in a first driving wheel axle W1 and a second driving wheel axle W2 (see FIGS. 18A and 18B) are driven to be rotated by supplying power thereto.

The electric moving body V includes a first receiving connection unit J1 (power receiving connection unit) receiving DC power from the DC power supply bus DL supplying DC power having a predetermined voltage in a management area (e.g., management area A1), a first power conversion device 1 converting the DC power received from the first receiving connection unit J1 into AC power, a power storage device 4 storing power and supplying power required for driving the first driving electric device 5a and the second driving electric device 5b to be rotated, a second power conversion device 2 converting DC power from the power storage device into AC power, and a power reception switching device 3 disposed at a middle position between the second power conversion device 2, the first power conversion device 1, and the second driving electric device 5b, and selectively connecting either the first power conversion device 1 or the second driving electric device 5b to the second power conversion device 2. Further, the electric moving body V includes a first switch 8 disposed at a middle position between the first receiving connection unit J1 and the first power conversion device 1 and selectively connecting either the first receiving connection unit J1 or the power storage device 4 to the first power conversion device 1, a second switch 9 connecting the first power conversion device 1 to the first driving electric device 5a or the power reception switching device 3 via the electrical insulation device 6, and a control device 7 controlling the first power conversion device 1, the second power conversion device 2, the power reception switching device 3, the first switch 8, the second switch 9, and the like. The electric moving body V includes a second receiving connection unit J2 directly connected to the power storage device 4.

As illustrated in FIG. 17, the electric moving body V has a traveling mode in which the power storage device 4 and the first power conversion device 1 are connected to each other by the first switch 8, the first power conversion device 1 and the first driving electric device 5a are connected to each other by the second switch 9, the second power conversion device 2 and the second driving electric device 5b are connected to each other by the power reception switching device 3, and AC power output from the first power conversion device 1 is supplied to the first driving electric device 5a and AC power output from the second power conversion device 2 is supplied to the second driving electric device 5b.

In addition, as illustrated in FIG. 16, the electric moving body V has a charging mode in which the first receiving connection unit J1 and the first power conversion device 1 are connected to each other by the first switch 8, the first power conversion device 1 and the power reception switching device 3 are connected to each other by the second switch 9, the second power conversion device 2 and the first power conversion device 1 are connected to each other by the power reception switching device 3, and AC power output from the first power conversion device 1 is converted into DC power by the second power conversion device 2 to supply the power to the power storage device 4.

The configurations of FIGS. 16 and 17 will be further described.

In the charging mode, when the first receiving connection unit J1 is physically connected to the DC power supply bus DL via the connection device 70 (first connection device), the electric moving body V transmits electric moving body identification information to the management device 80. At this time, DC power received from the DC power supply bus DL via the first receiving connection unit J1 is converted into AC power by the first power conversion device 1, and the AC power is supplied to the second power conversion device 2 to be converted into DC power, such that the DC power is supplied to the power storage device 4 for power charging, from establishment of electrical connection between the first receiving connection unit J1 and the DC power supply bus DL until the first receiving connection unit J1 and the DC power supply bus DL are disconnected from each other.

In addition, in the charging mode, in a case where the second receiving connection unit J2 is physically connected to the quick charging power converter 65 via the connection device 70A (second connection device), the electric moving body V transmits electric moving body identification information to the management device 80. At this time, DC power received from the quick charging power converter 65 via the second receiving connection unit J2 is supplied to the power storage device 4 for power charging, from establishment of electrical connection between the second receiving connection unit J2 and the quick charging power converter 65 until the second receiving connection unit J2 and the quick charging power converter 65 are disconnected from each other.

When the charging mode is canceled, the electric moving body V shifts to the traveling mode in which DC power output from the power storage device 4 is supplied to the first power conversion device 1 to convert the DC power into AC power and the AC power is supplied to the first driving electric device 5a, and is supplied to the second power conversion device 2 to convert the DC power into AC power and the AC power is supplied to the second driving electric device 5b.

In addition, in the electric moving body V, the first driving electric device 5a and the first power conversion device 1 may function as a regenerative braking device, and the second driving electric device 5b and the second power conversion device 2 may function as a regenerative braking device, such that when the output of the power storage device 4 is suppressed in the traveling mode, power generated by the driving electric device 5 is supplied to the power storage device 4 via the first power conversion device 1 or the second power conversion device 2 to charge the power storage device 4.

FIG. 18A is a diagram illustrating a relationship between a driving wheel axle and power conversion devices in a single-wheel driven type of the electric moving body V according to the third embodiment. FIG. 18B is a diagram illustrating a relationship between driving wheel axles and power conversion devices in an all-wheel driven type of the electric moving body V according to the third embodiment. Examples in which FIGS. 16 and 17 are applied to the respective types in the embodiment of the present invention will be described.

The single-wheel driven type (IWD) of FIG. 18A is used in an electric moving body V including a drive system enabling wheels to receive torque from several motors independently of each other. In the electric moving body V illustrated in FIG. 18A, the first driving wheel axle W1 and the second driving wheel axle W2 are wheel axles in a rear-wheel or front-wheel driven type, and the first driving electric device 5a is connected to the first driving wheel axle W1 and the second driving electric device 5b is connected to the second driving wheel axle W2. Accordingly, the first driving wheel axle W1 and the second driving wheel axle W2 can be individually controlled.

The all-wheel driven type (AWD) of FIG. 18B is used in an electric moving body V including a drive system driving all wheels. In the electric moving body V illustrated in FIG. 18B, the first driving wheel axle W1 is a wheel axle in a front-wheel driven type and the second driving wheel axle W2 is a wheel axle in a rear-wheel driven type, and the first driving electric device 5a is connected to the first driving wheel axle W1 and the second driving electric device 5b is connected to the second driving wheel axle W2. Accordingly, the first driving wheel axle W1 and the second driving wheel axle W2 can drive all the wheels.

FIG. 19 is a diagram illustrating a configuration of the management device 80 according to the third embodiment. The management device 80 includes a processing unit 81, a storage unit 82, an input unit 83, a display unit 84, and a communication unit 85. The processing unit 81 is a central processing unit (CPU), and includes a connection device control unit 811 controlling the connection devices 70 and 70A (see FIG. 15), a required power feeding time calculation unit 812 for electric moving body V calculating a power feeding time required for charging the electric moving body V, a power supply connection device control unit 813 controlling the power supply connection device 60 to select a power supply on the basis of a required capacity per unit time, a billing amount calculation unit 814 creating billing information for the electric moving body V, a charging command unit 815 commanding a charge recommendation signal or the like, which will be described later, a movement route pattern creation unit 816 creating movement route pattern information for the electric moving body V, and the like.

The storage unit 82 stores electric moving body management information 821 (see FIG. 20) which is information for managing electric moving bodies V, connection unit management information 822 (see FIG. 20) which is information for managing output connection units JL (see FIG. 15), mode-based unit price information 823 (see FIG. 20) which is information on mode-based unit prices for the normal charging mode and the quick charging mode, information terminal information 824 (see FIG. 20) which is information for managing information terminals T (see FIG. 15), electric moving body charging information 826 (see FIG. 21) which indicates charged states of the electric moving bodies V, DC power supply management information 827 which is information for managing DC power supplies, moving body position information 828 which is information on positions of the information terminals T, that is, the electric moving bodies V, moving route pattern information 829 for the electric moving bodies V, and the like.

The input unit 83 is a device for inputting an instruction to a computer, such as a keyboard or a mouse, and inputs an instruction for activating a program or the like. The display unit 84 is a display or the like, and displays an execution status, an execution result, and the like of processing by the management device 80. The communication unit 85 exchanges various data and commands with other devices via a network or the like. In addition, the communication unit 85 is also a wireless communication facility communicating with an information terminal T of a car navigation system or a mobile terminal having a communication function in a wireless manner.

FIG. 20 is a diagram illustrating an example of fixed information in the storage unit 82 according to the third embodiment. The fixed information includes electric moving body management information 821, connection unit management information 822, mode-based unit price information 823, and information terminal information 824.

The electric moving body management information 821 includes an electric moving body management ID 821a (electric moving body identification information or registered identification information), validity 821b indicating whether or not the electric moving body identification information is valid, a maximum storage amount 821c of a power storage device 4 of an electric moving body V, availability of normal charging mode 821d indicating whether or not the normal charging mode is available, availability of quick charging mode 821e indicating whether or not the quick charging mode is available, an owner 821f of the electric moving body V, contact information 821g of the owner, an information terminal ID 821h associated with the electric moving body management ID 821a, and the like.

The connection unit management information 822 includes a connection unit management ID 822a (connection unit identification information) of an output connection unit JL, a connection mode type 822b in which power is fed from the output connection unit JL, an installation position 822c (latitude and longitude information) of the output connection unit JL, address information 822d about the installation position, an installation date 822e, a manager 822f, contact information 822g, and the like.

The mode-based unit price information 823 includes a mode 823a, a unit time-based unit price 823c, 823e, or 823g for each time zone (first time 823b, second time 823d, or third time 823f), and the like. For example, the first time 823b includes 8:00 to 10:00 and 14:00 to 18:00, the second time 823d includes 10:00 to 14:00, and the third time 823f includes 18:00 to 8:00. A charge for each time zone is determined in consideration of the power generation performance of the power generation facility, such as reducing the unit price for three hours at night. In addition, the rapid charging mode is more expensive than the normal charging mode.

The information terminal information 824 includes an information terminal ID 824a, a model 824b, an owner 824c, contact information 824d, and the like.

FIG. 21 is a diagram illustrating an example of varying information in the storage unit 82 according to the third embodiment. The varying information includes electric moving body charging information 826 and moving body position information 828. The electric moving body charging information 826 includes an electric moving body management ID 826a (electric moving body identification information or registered identification information), a connection date and time 826b on/at which an electric moving body V is connected, a connection unit management ID 826c of a connected connection unit, a current storage amount 826d of the electric moving body V eligible for connection, a connection mode type 826e between the normal charging mode or the quick charging mode, a required power feeding time 826f (= (maximum storage amount - current storage amount) / power feeding amount per unit time) calculated by the required power feeding time calculation unit 812 for electric moving body V (see FIG. 19), a disconnection date and time 826g on/at which the electric moving body V is disconnected, a power feeding time 826h during which power is fed until the disconnection, and the like.

The moving body position information 828 includes an electric moving body management ID 828a, a date and time 828b, GPS position information 828c, and the like. Note that the GPS is an abbreviation of a global positioning system.

When the electric moving body V is electrically connected to the output connection unit JL to initiate the supply of DC power from the DC power supply bus DL to the electric moving body V, the management device 80 manages power feeding initiation date and time information indicating a date and time of the power feeding initiation in association with the connection unit identification information (connection unit management ID 826c) and the electric moving body identification information (electric moving body management ID 826a). Further, when the electric moving body V is electrically disconnected from the output connection unit JL to release the association therebetween, the management device 80 manages power feeding termination date and time information indicating a date and time of the power feeding termination in association with the connection unit identification information and the electric moving body identification information. Accordingly, the status of power feeding to each electric moving body V can be grasped.

The management device 80 calculates a power feeding time by subtracting the power feeding initiation date and time information from the power feeding termination date and time information, and calculates billing information for billing the electric moving body V by multiplying the power feeding time by the unit price information associated with the electric moving body identification information. Accordingly, it is possible to bill an owner of the electric moving body V.

The management device 80 stores and manages the connection unit identification information, the electric moving body identification information, and the unit price information as fixed information in the storage unit 82 (see FIG. 19), and stores and manages the power feeding initiation date and time information, the power feeding termination date and time information, the power feeding time, and the billing information as varying information (see FIGS. 19 and 20) in the storage unit 82. Accordingly, the management device 80 can manage each piece of the stored information as fixed information or varying information.

The output connection unit JL is physically connected to the DC power supply bus DL at a predetermined connection unit installation position of the DC power supply bus DL, and the management device 80 stores the address information 822d corresponding to the connection unit installation position in the storage unit 82 in association with each other. This facilitates maintenance work including management and maintenance of the output connection unit JL.

For each electric moving body identification information, the management device 80 may store information on an address of an output connection unit whenever each electric moving body V is electrically connected to the DC power supply bus DL as the movement route pattern information 829 in a time-series manner in association with the power feeding initiation date and time information, and update the movement route pattern information 829 when the electric moving body V is newly electrically connected to the DC power supply bus DL via the output connection unit JL. Accordingly, a user's charging position can be grasped for each electric moving body V.

In the charging mode, the management device 80 acquires, updates, and stores electric moving body management information 821 associated with the registered identification information which is an electric moving body management ID 821a through the control unit 74, the electric moving body management information 821 including maximum storage amount information (maximum storage amount 821c) which is a rated storage amount of a power storage device, current storage amount information (current storage amount 826d), and owner information (owner 821f). Accordingly, the up-to-date information can be acquired.

When a charging required value set for each electric moving body management ID (registered identification information) is reached (for example, when an SOC (charge rate) is 200 or less), the management device 80 may transmit a charging command signal indicating that charging is required to an information terminal T corresponding to the registered identification information. Accordingly, a driver can recognize the insufficient capacity of the power storage device 4.

When transmitting the charging command signal, the management device 80 may transmit GPS position information 828c about a connection device 70 closest to a position of the information terminal T stored in advance based on the connection unit management information 822 and the moving body position information 828. Accordingly, a driver can stop by the connection device 70 for charging in the shortest time period.

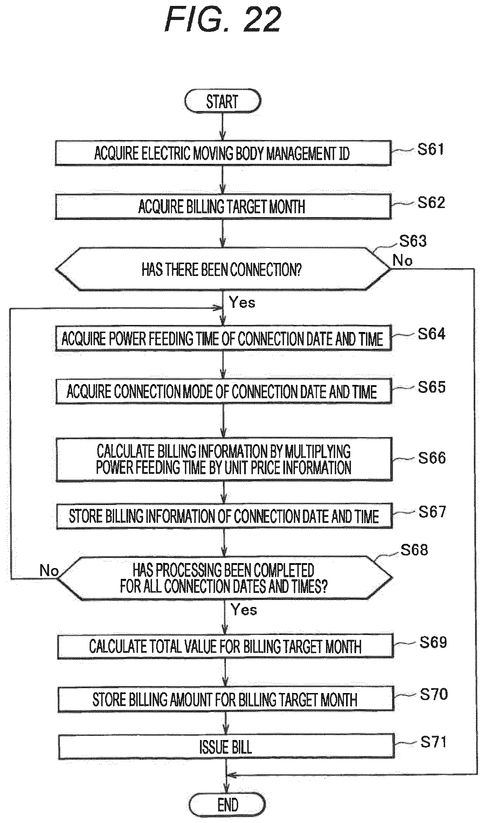

FIG. 22 is a flowchart illustrating an example of a billing process of the management device according to the third embodiment. FIGS. 15 to 19 will be appropriately referred to. The billing amount calculation unit 814 of the processing unit 81 acquires an electric moving body management ID (step S61), and acquires a billing target month (step S62). The processing unit 81 determines whether or not there has been a connection to an output connection unit JL, with reference to the electric moving body charging information 826, with respect to the electric moving body management ID acquired in step S61 (step S63). When there has been a connection (step S63, Yes), the processing unit 81 acquires a power feeding time of a connection date and time (step S64), acquires a connection mode of the connection date and time (step S65), and calculates billing information by multiplying the power feeding time by unit time-based unit price information on the basis of the mode-based unit price information 823 (step S66). Then, the processing unit 81 stores the billing information of the connection date and time in the storage unit 82 (step S67), and determines whether or not the processing has been completed for all connection dates and times (step S68). When the processing has not been completed for all the connection dates and times (step S68, No), the process returns to step S64, and steps S64 to S68 are repeated for a next connection date and time.

When the processing has been completed for all the connection dates and times in step S68 (step S68, Yes), the processing unit 81 calculates a total value for the billing target month (step S69), stores the total value for the billing target month as a billing amount in the storage unit 82 (step S70), issues a bill (step S71), and ends the series of steps of the process. Note that when there has been no connection to an output connection unit JL for the billing target month in step S63 (step S63, No), the process ends.

Accordingly, an owner of each electric moving body management ID can be billed monthly on the basis of the power feeding time and the connection mode corresponding to the electric moving body management ID. Note that it is described in FIG. 20 that the billing information is calculated for monthly billing, but the same may be done daily, weekly, or every predetermined period.

With respect to a supplied amount of DC power for each electric moving body management information ID (registered identification information), the management device 80 may transmit a billing amount to the corresponding information terminal T via the wireless communication facility, the billing amount being calculated by multiplying a total amount of supplied DC power by a corresponding market value unit price for a predetermined period. Accordingly, a driver can promptly see the billing amount.

FIG. 4 is a diagram illustrating a configuration of the power reception switching device 3 and the electrical insulation device 6 according to the third embodiment. FIG. 16 will be appropriately referred to. The power reception switching device 3 is a three-phase switching device. In the power receiving state, changeover switches 3u, 3v, and 3w connect the first power conversion device 1 to the second power conversion device 2 via the electrical insulation device 6 (see unbroken lines). In the non-power receiving state, the changeover switches 3u, 3v, and 3w connect the second driving electric device 5b to the second power conversion device 2 (see broken lines).

In the CHAdeMO standard (registered trademark), which is a conventional automotive quick charging standard, it is obligatory to insulate an electric vehicle from a system power supply (commercial power supply). In order to form a structure similar thereto, the electrical insulation device 6 is disposed between the first power conversion device 1 and the second power conversion device 2. The electrical insulation device 6 is, for example, an insulation voltage transformer.

That is, the electrical insulation device 6 is disposed at a middle position between the power reception switching device 3 and the first power conversion device 1 to electrically insulate the first power conversion device 1 and the second power conversion device 2 from each other when the first power conversion device 1 and the second power conversion device 2 are connected to each other.

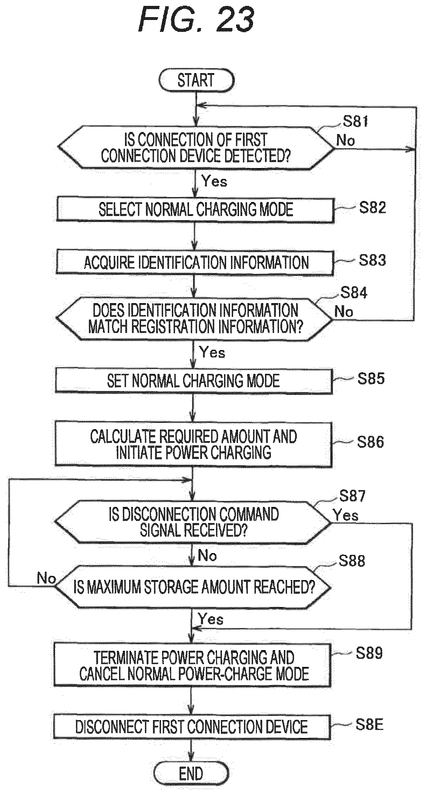

FIG. 23 is a flowchart illustrating a process in a normal charging mode of the management device 80 according to the third embodiment. FIGS. 15 to 17 will be appropriately referred to. The processing unit 81 determines whether or not connection of the first connection device (connection device 70) has been detected (step S81). When the connection of the first connection device has been detected (step S81, Yes), the processing unit 81 selects a normal charging mode (step S82), and the process proceeds to step S83. When the connection of the first connection device has not been detected (step S81, No), the process returns to step S81.

The processing unit 81 acquires an electric moving body management ID (electric moving body identification information) from a connected electric moving body V in step S83, and determines whether or not the electric moving body management ID matches registration information with reference to the electric moving body management information 821 (step S84). When the electric moving body management ID matches the registration information (step S84, Yes), the process proceeds to step S85. When the electric moving body management ID does not match the registration information (step S84, No), the processing unit 81 notifies the electric moving body V that it has not been registered, and the process returns to step S81.

The processing unit 81 sets the normal charging mode in step S85, and calculates a required charging amount and initiates power charging (step S86). After initiating the power charging, the processing unit 81 determines whether or not a disconnection command signal has been received from the electric moving body V (step S87). When the disconnection command signal has not been received (step S87, No), the process proceeds to step S88. When the disconnection command signal has been received (step S87, Yes), the process proceeds to step S89.

In step S88, the processing unit 81 determines whether or not a maximum storage amount of the electric moving body V has been reached. When the maximum storage amount has been reached (step S88, Yes), the process proceeds to step S89. When the maximum storage amount has not been reached (step S88, No), the process returns to step S87. In step S89, the processing unit 81 terminates the charging and cancels the normal charging mode. Then, the processing unit 81 disconnects the first connection device (connection device 70) (step S8E), and ends the series of steps of the process.

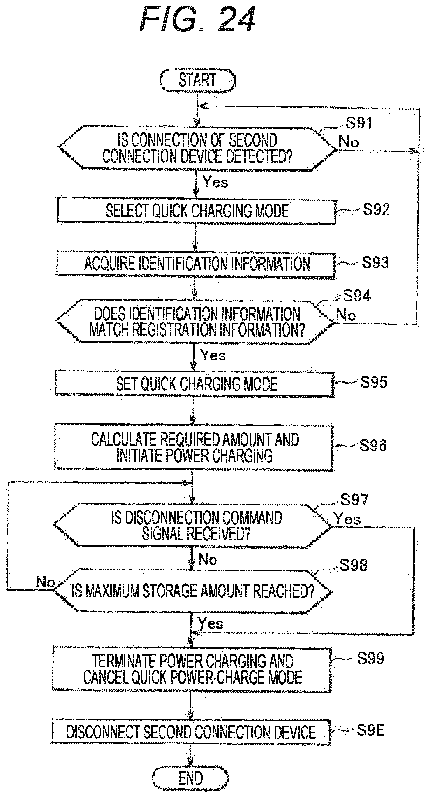

FIG. 24 is a flowchart illustrating a process in a quick charging mode of the management device 80 according to the third embodiment. FIGS. 15 to 17 will be appropriately referred to. The processing unit 81 determines whether or not connection of the second connection device (connection device 70A) has been detected (step S91). When the connection of the second connection device has been detected (step S91, Yes), the processing unit 81 selects a quick charging mode (step S92), and the process proceeds to step S93. When the connection of the second connection device has not been detected (step S91, No), the process returns to step S91.

The processing unit 81 acquires an electric moving body management ID (electric moving body identification information) from a connected electric moving body V in step S93, and determines whether or not the electric moving body management ID matches registration information with reference to the electric moving body management information 821 (step S94). When the electric moving body management ID matches the registration information (step S94, Yes), the process proceeds to step S95. When the electric moving body management ID does not match the registration information (step S94, No), the processing unit 81 notifies the electric moving body V that it has not been registered, and the process returns to step S91.

The processing unit 81 sets the quick charging mode in step S95, and calculates a required charging amount and initiates power charging (step S96). After initiating the power charging, the processing unit 81 determines whether or not a disconnection command signal has been received from the electric moving body V (step S97). When the disconnection command signal has not been received (step S97, No), the process proceeds to step S98. When the disconnection command signal has been received (step S97, Yes), the process proceeds to step S99.

In step S98, the processing unit 81 determines whether or not a maximum storage amount 821c of the electric moving body V has been reached. When the maximum storage amount 821c has been reached (step S98, Yes), the process proceeds to step S99. When the maximum storage amount 821c has not been reached (step S98, No), the process returns to step S97. In step S99, the processing unit 81 terminates the power charging and cancels the quick charging mode. Then, the processing unit 81 disconnects the second connection device (connection device 70A) (step S9E), and ends the series of steps of the process.

For the same electric moving body identification information, the management device 80 does not set an electrical connection by the second connection device (connection device 70A) while an electrical connection is established by the first connection device (connection device 70), and does not set an electrical connection by the first connection device while an electrical connection is established by the second connection device. Accordingly, it is possible to avoid a charging mode being set in such a manner that the normal charging mode and the quick charging mode overlap with each other for the electric moving body V having the same electric moving body identification information.

As described above, the management device 80 can set a required amount by calculating a difference between a maximum storage amount 821c and a current storage amount 826d of a power storage device 4 acquired from an electric moving body V in the charging mode, the maximum storage amount of the power storage device 4 corresponding to the electric moving body identification information having been stored in advance in the storage unit 82 in association with each other, or set a power feeding time by dividing the required amount by a charge capacity per unit time.

The management device 80 may calculate a total value of required amounts set for electric moving bodies V to which the charging mode is set, select a required one from the DC power supply devices physically connected to the DC power supply bus DL according to the total value of the required amounts, and electrically connect the selected DC power supply device to the DC power supply bus DL. Accordingly, when the total required amount increases, the supply from the DC power supply can be increased, and when the total required amount decreases, the supply from the DC power supply can be decreased.

FIG. 25 is a diagram illustrating an arrangement configuration example of the connection device 70 according to the third embodiment. The DC power supply bus DL is covered with a coating member subjected to anticorrosion processing and buried in an underground portion having a predetermined depth from the ground. The output connection unit JL is physically connected to the DC power supply bus DL at a predetermined connection unit installation position of the DC power supply bus DL, disposed downward to a predetermined height position from the ground at the connection unit installation position on a support 78 disposed at a ground portion, and includes a cover 75 having a one-touch lock function for locking the output connection unit JL during use and during non-use.

FIG. 26 is a diagram illustrating a circuit configuration example of the connection device 70 according to the third embodiment. The electric moving body charging system 100 includes a plurality of connection devices 70 for receiving DC power from the DC power supply bus DL and supplying the DC power to electric moving bodies V. The connection device 70 includes an input connection unit 76 connected to the DC power supply bus DL, an output connection unit JL connected to the first receiving connection unit J1 (see FIGS. 15 and 16) disposed on the electric moving body V, an energization switch 71 disposed at a middle position between the input connection unit 76 and the output connection unit JL, and a control unit 74.

When the first receiving connection unit J1 is physically connected to the output connection unit JL, the control unit 74 acquires identification information from the electric moving body V and transmits the acquired identification information to the management device 80. When receiving a signal indicating that the acquired identification information is included in the registered identification information from the management device 80, the control unit 74 sets a normal charging mode to the electric moving body V.

Similarly, the connection device 70A (see FIG. 15) includes an input connection unit 76 connected to the DC power supply bus DL, an output connection unit JL connected to the second receiving connection unit J2 disposed on the electric moving body V, an energization switch 71 disposed at a middle position between the input connection unit 76 and the output connection unit JL, and a control unit 74. When the second receiving connection unit J2 (see FIG. 16) is physically connected to the output connection unit JL, the control unit 74 acquires identification information from the electric moving body V and transmits the acquired identification information to the management device 80. When receiving a signal indicating that the acquired identification information is included in the registered identification information from the management device 80, the control unit 74 sets a quick charging mode to the electric moving body V.

In FIG. 26, a DC two-wire type is illustrated as an example. The DC power supply bus DL includes a DC power supply bus D + and a DC power supply bus DL-. The connection device 70 includes an energization switch 71, an output connection unit JL, an abnormality detection switch 72 as a state where the electrical connection of the electric moving body V is simulated, and a DC current detector 73. The connection device 70 is connected from the DC power supply bus DL+ to one end of the output connection unit JL via the energization switch 71, and is connected from the other end of the output connection unit JL to the bus DL-. In addition, the connection device 70 is branched from the middle between the energization switch 71 and the output connection unit JL to be connected to one end of the abnormality detection switch 72, and is connected from the other end of the abnormality detection switch 72 to the bus DL- via the DC current detector 73.

The management device 80 has an abnormality detection mode in which with respect to an output connection unit JL to which an electric moving body V is not physically connected, when the abnormality detection switch 72 simulating a connected state of the output connection unit JL is closed and the energization switch 71 is closed as a state in which the electric moving body V is electrically connected, a current as an abnormality detection signal flows through the abnormality detection switch 72 and the DC current detector 73, and an abnormality is detected by the DC current detector 73 through which the abnormality detection signal passes.

The management device 80 may repeat the abnormality detection mode to perform abnormality detection with respect to all output connection units JL to which no electric moving body V is physically connected. Accordingly, it can be inspect whether or not there is an abnormality in the connection device 70.

Note that it is illustrated in FIG. 26 that the DC power supply bus DL is in the DC two-wire type, but a DC three-wire type may also be implemented in a similar manner.

In the normal charging mode, the management device 80 can further electrically connect the output connection unit JL and the first receiving connection unit J1 (power receiving connection unit) by turning on the energization switch 71, and supply a required amount of DC power from the DC power supply bus DL to the power storage device 4 of the electric moving body V for power charging, the required amount of DC power being obtained by subtracting the current storage amount information from the maximum storage amount information. When the required amount of DC power has been supplied to the electric moving body V or when the first receiving connection unit J1 has been disconnected from the DC power supply bus DL, the charging mode of the electric moving body V can be canceled. The same also applies to the quick charging mode (see FIGS. 15 and 16).

The management device 80 may acquire, via the control unit 74, an amount of DC power supplied to each of the electric moving bodies V to which the charging mode is set, while corresponding to respective electric moving body management IDs 821a (see FIG. 20) as registered identification information, from the time when the supply of DC power is started until the charging mode is canceled, and store the acquired amount of DC power in association with the corresponding date and time information and market value unit price information.

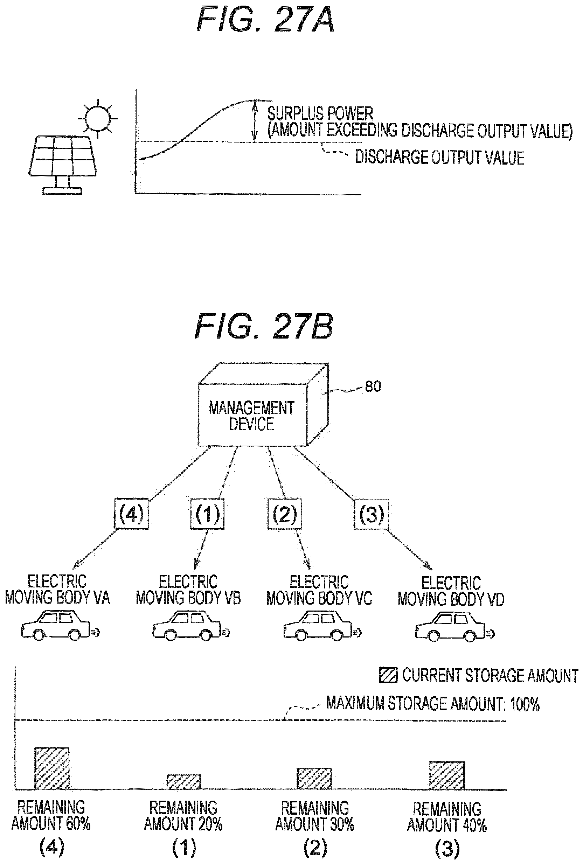

FIG. 27 is a diagram illustrating a charging encouragement mode of the management device according to the third embodiment, and is an explanatory diagram illustrating surplus power of renewable energy. FIG. 27B is a diagram illustrating a charging encouragement mode of the management device according to the third embodiment, and is a diagram illustrating a specific example of the charging encouragement mode. As described with reference to FIG. 15, in order to supply power to the specific management area A1 (see FIG. 15), the electric moving body charging system 100 includes one or more first power generation facilities 10, which are power generation facilities using wind as renewable energy, and one or more second power generation facilities 20, which are power generation facilities using sunlight as renewable energy. The surplus power with respect to the power demand is usually charged in the power accumulation facility 50. However, when the SOC (charge rate) reaches an upper limit value (discharge output value), surplus power may be generated as illustrated in FIG. 27A. In order to effectively use the surplus power, the management device 80 has a charging encouragement mode.

The management device 80 periodically grasps a specific output that is an output of the power generation facility using natural energy. When the specific output has reached a set discharge output value, the management device 80 specifies target electric moving bodies, which are electric moving bodies V to be supplied with power, by adding allowable charging amounts of electric moving bodies V corresponding to the registered identification information in the management area A1 (see FIG. 15) in ascending order of current storage amount until a capacity exceeding the discharge output value of the specific output is reached, the allowable charging amounts each being obtained by subtracting the current storage amount information from the maximum storage amount information. Then, the management device 80 transmits a charging encouragement signal indicating encouragement of charging together with today's market value unit price information to an information terminal T corresponding to each of the target electric moving bodies.

As a specific example based on FIG. 27B, it is assumed that remaining amounts as current storage amounts of electric moving bodies V are 60% in an electric moving body VA, 200 in an electric moving body VB, 30% in an electric moving body VC, and 40% in an electric moving body VD. The management device 80 transmits a charging encouragement signal indicating encouragement of charging to an electric moving body V having a small remaining amount as a current storage amount among the electric moving bodies V. That is, the charging encouragement signal is transmitted in the following order: (1) the electric moving body VB, (2) the electric moving body VC, (3) the electric moving body VD, and (4) the electric moving body VA.

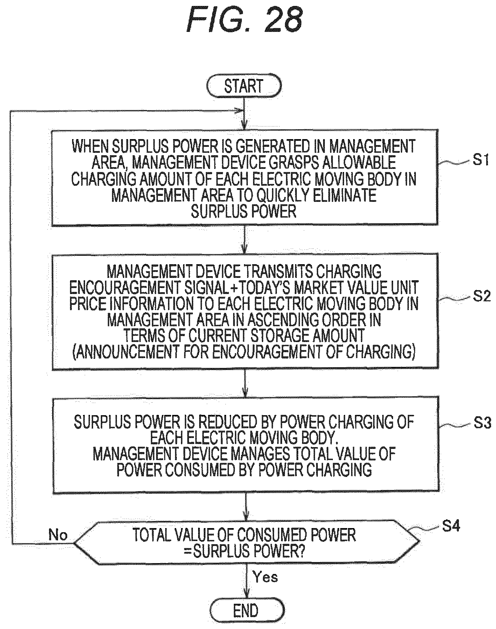

FIG. 28 is a flowchart illustrating a process in a charging encouragement mode of the management device 80 according to the third embodiment. FIGS. 27A and 27B will be appropriately referred to.

When surplus power has been generated in the management area A1 (see FIG. 15), the management device 80 grasps a charge capacity of each of the electric moving bodies V in the management area A1 in order to quickly eliminate the surplus power (step S1).

The management device 80 transmits a charging encouragement signal together with a today's market value unit price information to each of the electric moving bodies V, that is, an information terminal T (see FIG. 15), in the management area A1 in ascending order of current storage amount (step S2). The information terminal T receiving the charging encouragement signal displays the market value unit price information along with the fact that it has received the charging encouragement signal on the display unit, and makes an audio announcement. Accordingly, a driver can determine whether or not to charge the electric moving body with reference to the market value unit price information.

When transmitting the charging encouragement signal, the management device 80 transmits GPS position information about a connection device 70 (see FIG. 15) closest to the position of the information terminal T stored in advance. Accordingly, when the driver determines to charge the electric moving body, the driver can promptly go to the closest connection device 70.

Since the surplus power is reduced by the power charging of each electric moving body V, the management device 80 manages a total value of power consumed by the power charging (step S3).

The management device 80 determines whether the total value of power consumption is equal to the surplus power, that is, whether or not the surplus power has been eliminated (step S4). When the surplus power has not been eliminated (step S4, No), the process returns to step S1. When the surplus power has been eliminated (step S4, Yes), the management device 80 ends the charging encouragement mode.

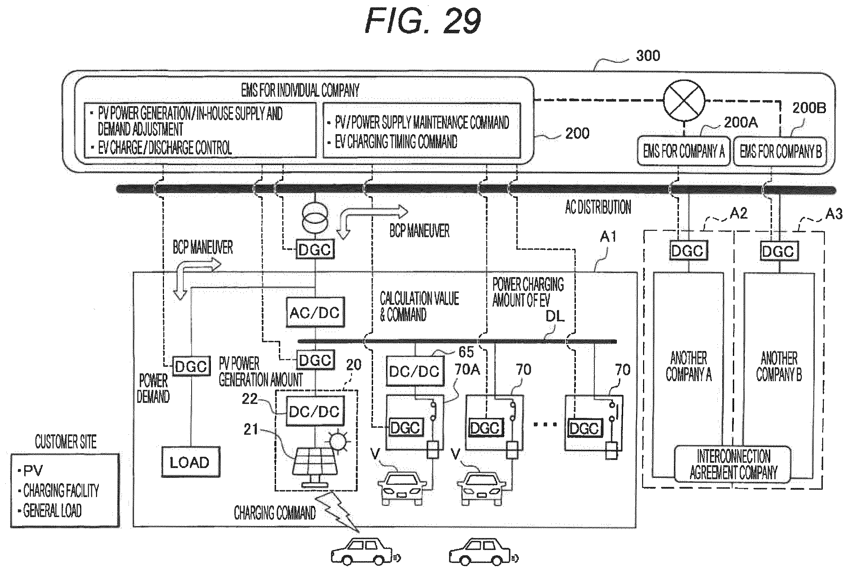

FIG. 29 is a diagram illustrating an energy management system (EMS) using the electric moving body charging system 100 (see FIG. 15) according to the third embodiment. Concerning a management area A1 of a host company and management areas A2 and A3 of interconnection agreement companies, the electric moving body charging system 100 according to the third embodiment is applied into each of the management areas, and the systems are interconnected by AC distribution between the management areas to interchange power. In the drawing, a business continuity planning (BCP) maneuver is a scheme for companies to minimize damage and continue or recover business when an emergency such as a disaster occurs.

In the management area A1, a DC power supply bus DL is disposed, and DC power is supplied from, for example, a second power generation facility 20. A normal charging connection device 70 and a quick charging connection device 70A are connected to the DC power supply bus DL. In each of the connection devices 70 and 70A, a digital grid controller (DGC) is disposed as a control unit 74. The DGC is a device supporting power identification and power interchange while acquiring data from a smart meter installed in a demand base in an EMS management device 200. The EMS management device 200 is a management device corresponding to the management device 80 of FIG. 15, and performs photovoltaics (PV) power generation/in-house supply and demand adjustment, electric vehicle (EV) charge/discharge control, PV/power supply maintenance command, EV charging timing command, and the like. An integrated management device 300 is a management device integrally managing a plurality of EMS management devices 200, 200A and 200B.

In FIG. 29, there are a plurality of management areas A1, A2, and A3, and the electric moving body charging system 100 is provided for each of the management areas. An electric moving body V may be registered in all the electric moving body charging systems 100 selected and contracted by the electric moving body V. Accordingly, the registered electric moving body V can be charged in any management area.

FIG. 29 will be described in more detail.

In FIG. 29, the management area refers to a territory managed by one manager within a jurisdiction region of a local government, within a business place of a company, or the like, and is a territory that is not subject to any restriction from a third party in laying a DC power supply bus DL and registering an electric moving body V.

As illustrated in FIG. 29, there are a plurality of management areas A1, A2, and A3. As illustrated in FIG. 15, in each of the management areas, there are provided an electric moving body charging system 100, and an energy management system (EMS) managing the electric moving body charging system 100 and electric moving bodies V to which DC power is supplied from the electric moving body charging system 100.

Each energy management system (EMS) includes an EMS management device 200 as the management device 80 illustrated in FIG. 19, which is interconnected with an EMS management device 200 in another management area, such that the information illustrated in FIGS. 20 and 21, such as an amount of DC power that can be currently supplied and information on registered electric moving bodies V, can be referred to between the EMS management devices 200. Further, although not illustrated in FIG. 20, the EMS management device 200 includes point of interest (POI) information indicating standard information, such as a convenience store, a supermarket, or the like related to the installation position 822c of the output connection unit JL, and the POI information can also be referred to between the EMS management devices 200.

Each EMS management device 200 registers electric moving body management IDs of electric moving bodies V to which the DC power can be supplied in its management area. Using the electric moving body management ID, a command signal for urging charging can be given via an information terminal T mounted on a corresponding electric moving body V, and a storage amount of a power storage device 4 (see FIG. 16) can be acquired.

In addition, each of the energy management systems (EMS) is connected to the output connection unit JL, each of the power generation facilities, and the like through the digital grid controller (DGC). The DGC has a function of acquiring a current power storage amount from an electric moving body V to acquire an amount of DC power to be supplied, and handling exchange of other various digital signals and the like in a short cycle on the order of seconds.

In the above-described configuration, the energy management system (EMS) performs the following management. The energy management system (EMS) acquires an current suppliable DC power amount of each of the DC power generation facilities managed thereby from each of the DC power generation facilities through the DGC, and also acquires a current DC power storage amount of each of the registered electric moving bodies V by wireless communication.

Although not illustrated in FIG. 20, when the current DC power storage amount acquired from each electric moving body V reaches a power feeding instruction amount of each electric moving body V registered in advance, a charging command is wirelessly transmitted to a corresponding electric moving body V. At that time, a position of an output connection unit JL closest to a current position of the electric moving body V is retrieved, and position information is also notified. In addition, at that time, the corresponding POI information is also retrieved to preferentially notify an output connection unit JL in which free-of-charge parking is secured for a sufficient time enough to charge the electric moving body V. Through the notified information, for example, a driver of a courier or a taxi can select an output connection unit JL arranged in a convenience store, a supermarket, or the like for power charging, and finish miscellaneous affairs such as lunch during the power charging.

In addition, when the energy management system (EMS) issues a charging command to a registered electric moving body V, if the electric moving body V is located at a position closer to an output connection unit JL in another management area than that in its management area, or if a DC power generation facility in another management area in which the electric moving body V has been registered currently has a sufficient supply amount, the energy management system (EMS) notifies an output connection unit JL disposed in the management area in which the sufficient supply is available together with POI information. Further, the energy management system (EMS) notifies the electric moving body V of information on market values of DC power supplied in the respective management areas, and gives the electric moving body V the right to select an output connection unit JL.

In the electric moving body V of the third embodiment, the power storage device 4 can be charged by receiving power having a relatively low voltage (e.g., DC 200 V) from the DC power supply bus DL via the cable C, converting the power into AC power by the first power conversion device 1 as a DC-AC converter (also referred to as a DC-AC inverter), and converting the AC power into DC power having a high voltage (e.g., DC 360 to 400 V) by the second power conversion device 2 as an AC-DC converter. Conventionally, it has been necessary to arrange a relatively expensive quick charging device in a territory. However, in the present invention, the first power conversion device 1 (DC-AC converter) and the power reception switching device 3 are arranged in the electric moving body V to enable power charging, although not quickly. In addition, if a large number of output connection units JL (see FIG. 15), which are power feeding spots, are provided in the territory, the electric moving body V can be charged in any output connection unit JL. When quick charging is required, charging can be performed through the connection device 70A and the quick charging power converter 65.

### (Modified Example)

The single DC power supply bus DL is illustrated in the embodiment of FIG. 15, but the present invention is not limited thereto. The DC power supply bus DL may be branched into the management areas.

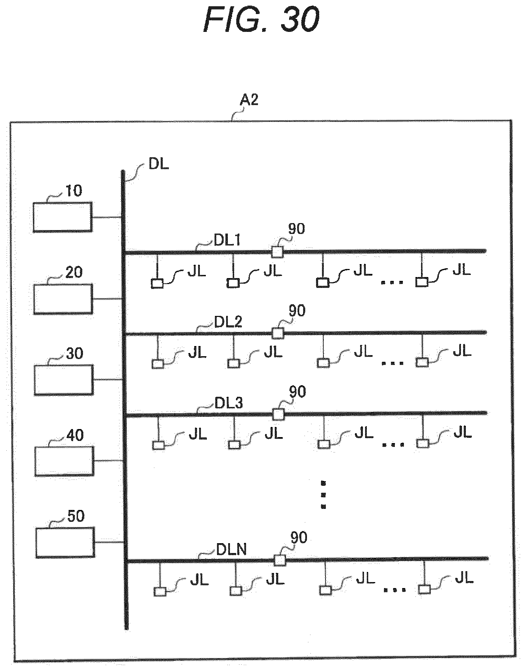

FIG. 30 is a diagram illustrating another configuration of a management area A2 including power feeding spots according to the third embodiment. It is illustrated in FIG. 30 that a large number of power feeding spots are provided at branch DC buses in the management area A2. In the management area A2, the DC power supply bus DL is branched into branch DC buses DL1, DL2, DL3,..., and DLN. Each of the branch DC buses DL1, DL2, DL3,..., and DLN has a plurality of output connection units JL. In addition, a voltage compensation device 90 is disposed in the middle of each of the branch DC buses DL1, DL2, DL3,..., and DLN. The electric moving body V can be charged at any time in any output connection unit JL (power feeding spot).

In a case where the management area A2 is a predetermined municipality, if the branch DC buses DL1, DL2, DL3,..., and DLN are arranged using power cables, an electric moving body V registered in advance can be charged in an output connection unit JL (power feeding spot) close thereto without having to move to a location of a charging device. In addition, the electric moving body V can be charged in an output connection unit JL close thereto even in a case where its charge capacity has decreased.

When the management area A2 includes production factories, the branch DC buses DL1, DL2, DL3, ..., and DLN may be arranged in the production factories using power cables. In the embodiment illustrated in FIG. 15, an electric vehicle or the like is illustrated as the electric moving body V, but the electric moving body V is not limited thereto. The electric moving body V may be a battery-type forklift or the like arranged in the factory.

In addition, as long as the third power generation facility 30 is a wood gasification-based power generator using thinned wood or the like in a territory to be originally discarded, it goes without saying that the third power generation facility 30 is excellent in cost performance, given its transportation cost and the like, as compared with a power generator using natural gas or petroleum, which is an imported product, as a fuel.

The electric moving body charging system 100 according to the third embodiment makes it possible that a management area is supplied with power preferentially by an existing renewable energy generator (e.g., wind power generator) that does not require fuel cost, and when power is insufficient, the management area is additionally supplied with power by another power generator (e.g., wood gasification-based power generator) that requires fuel. Accordingly, power can be stably supplied to the electric moving bodies V or the like while reducing cost.

In the third embodiment, it has been described that the electric moving body V travels when driving electric devices provided in driving wheel axles are driven to be rotated by supplying power thereto, but an in-wheel motor can also be applied thereto.

### Reference Signs List

1 first power conversion device
2 second power conversion device
3 power reception switching device (power demand-supply switching device)
3u, 3v, 3w changeover switch
4 power storage device
5 driving electric device
5a first driving electric device
5b second driving electric device
6 electrical insulation device
7 control device
8 first switch (C-contact switch)
9 second switch (A-contact switch)
10 first power generation facility (power generation facility using natural energy)
11 wind power generator
12, 22, 32, 42, 52, 92 power converter
20 second power generation facility (power generation facility using natural energy)
21 solar power generator
30 third power generation facility (internal combustion-based power generation facility)
31 power generator
40 supply facility
41 commercial power system
50 power accumulation facility
51 power accumulation device
60 power supply connection device
65 quick charging power converter
70, 70A connection device
70C quick charging power converter
71 energization switch
71C first connection device
72 abnormality detection switch
72C second connection device
73 DC current detector
74 control unit
75 cover
80 management device
81 processing unit
811 connection device control unit
812 required power feeding time calculation unit (required power feeding time calculation unit for electric moving body)
812U required charging amount calculation unit for electric moving body
813 power supply connection device control unit
814 billing amount calculation unit
815 charging command unit
816 movement route pattern creation unit
82 storage unit
821 electric moving body management information
821a electric moving body management ID (registered identification information)
822 connection unit management information
822T electric moving body charging information
823 mode-based unit price information
823T DC power supply management information
824T required amount management information
826 electric moving body charging information
827 DC power supply management information
828 moving body position information
829 movement route pattern information
83 input unit
84 display unit
85 communication unit (wireless equipment)
90 voltage compensation device
100 electric moving body charging system (DC power supply facility)
200, 200A, 200B EMS management device
300 integrated management device
A1, A2, A3 management area
BCP Business continuity planning
C cable
DL DC power supply bus
DL1, DL2, DL3, DLN branch DC bus
DGC Digital Grid Controller
J1 first receiving connection unit (power receiving connection unit)
J2 second receiving connection unit
J5 connection unit
JC1, JC2 connection unit
JL output connection unit (power feeding spot)
T information terminal
V electric moving body
W1 first driving wheel axle
W2 second driving wheel axle

## Claims

1. An electric moving body (V) traveling when a driving electric device (5) is driven to be rotated by supplying power thereto, the electric moving body (V) comprising:
a power receiving connection unit (J1) that receives DC power from the outside;
a first power conversion device (1) that converts the DC power received from the power receiving connection unit (J1) into AC power;
a power storage device (4) that stores power and supplies power required for driving the driving electric device (5) to be rotated;
a second power conversion device (2) that converts the DC power from the power storage device (4) into AC power;
a power demand-supply switching device (3) that is disposed at a middle position between the second power conversion device (2), the first power conversion device (1), and the driving electric device (5), and selectively connects either the first power conversion device (1) or the driving electric device (5) to the second power conversion device (2);
a first switch (8), that is disposed at a middle position between the power receiving connection unit (J1) and the first power conversion device (1), has a common terminal, an a-contact terminal disposed on a side facing the power storage device (4), and a b-contact terminal disposed on a side facing the first receiving connection unit (J1) and selectively connects either the power receiving connection unit (J1) or the power storage device (4) to the first power conversion device (1);
a second switch (9) that connects the driving electric device (5) to the first power conversion device (1); and
a control device (7),
wherein the control device (7) has:
a traveling mode in which when the traveling mode is in a power mode, the power storage device (4) and the first power conversion device (1) are connected to each other by the first switch (8), the first power conversion device (1) and the driving electric device (5) are connected to each other by the second switch (9), and the second power conversion device (2) and the driving electric device (5) are connected to each other by the power demand-supply switching device (3), such that the AC power output from the first power conversion device (1) and the AC power output from the second power conversion device (2) are supplied to the driving electric device (5); wherein the AC power output from the first power conversion device (1) and the AC power output from the second power conversion device (2) are synchronized with each other in phase, and
a charging mode in which, in a power receiving state where it is detected that a prepared DC power supply device (100) has been connected to the power receiving connection unit (J1), the power receiving connection unit (J1) and the first power conversion device (1) are connected to each other by the first switch (8) while the second switch (9) does not connect the first power conversion device (1) and the driving electric device (5) to each other, and the first power conversion device (1) and the second power conversion device (2) are connected to each other by the power demand-supply switching device (3), such that the received DC power is converted into AC power by the first power conversion device (1), the AC power is converted into DC power through the second power conversion device (2), and the DC power is supplied to the power storage device (4) for power charging, wherein
when the traveling mode is an eco-mode, the first switch (8) is connected to the b-contact terminal, and the second switch (9) is opened so that the driving electric device (5) is supplied only with AC power supplied via the second power conversion device (2).

2. The electric moving body (V) according to claim 1, further comprising an electrical insulation device (6) disposed at a middle position between the power demand-supply switching device (3) and the first power conversion device (1) to electrically insulate the first power conversion device (1) and the second power conversion device (2) from each other when the first power conversion device (1) and the second power conversion device (2) are connected to each other.

3. The electric moving body (V) according to claim 1, wherein
when the first switch (8) is connected to the a-contact terminal, DC power supplied from the power storage device (4) is input to the first power conversion device (1), and
when the first switch (8) is connected to the b-contact terminal, DC power supplied from the external DC bus is input to the first power conversion device (1).

4. The electric moving body (V) according to claim 1, wherein
the first switch (8) normally connects the power receiving connection unit (J1) to the first power conversion device (1), and
when the electric moving body (V) receives a power mode command to increase power supply to the driving electric device (5), the first switch (8) connects the power storage device (4) to the first power conversion device (1), and the second switch (9) connects the first power conversion device (1) to the driving electric device (5).

## Patentansprüche

1. Elektrischer Bewegungskörper (V), der sich bewegt, wenn eine elektrische Antriebsvorrichtung (5) angetrieben wird, um durch Zuführen von Energie dazu gedreht zu werden, wobei der elektrische Bewegungskörper (V) umfasst:
eine Energieaufnahmeverbindungseinheit (J1), die Gleichstromenergie von außen aufnimmt;
eine erste Energieumwandlungsvorrichtung (1), die die von der Energieaufnahmeverbindungseinheit (J1) aufgenommene Gleichstromenergie in Wechselstromenergie umwandelt;
eine Energiespeichervorrichtung (4), die Energie speichert und Energie zuführt, die zum Antreiben der zu drehenden elektrischen Antriebsvorrichtung (5) erforderlich ist;
eine zweite Energieumwandlungsvorrichtung (2), die die Gleichstromenergie von der Energiespeichervorrichtung (4) in Wechselstromenergie umwandelt;
eine Energiebedarfsversorgungs-Schaltvorrichtung (3), die an einer mittleren Position zwischen der zweiten Energieumwandlungsvorrichtung (2), der ersten Energieumwandlungsvorrichtung (1) und der elektrischen Antriebsvorrichtung (5) angeordnet ist und selektiv entweder die erste Energieumwandlungsvorrichtung (1) oder die elektrische Antriebsvorrichtung (5) mit der zweiten Energieumwandlungsvorrichtung (2) verbindet;
einen ersten Schalter (8), der an einer mittleren Position zwischen der Energieaufnahmeverbindungseinheit (J1) und der ersten Energieumwandlungsvorrichtung (1) angeordnet ist, einen gemeinsamen Anschluss, einen a-Kontaktanschluss, der auf einer Seite angeordnet ist, die der Energiespeichervorrichtung (4) zugewandt ist, und einen b-Kontaktanschluss aufweist, der auf einer Seite angeordnet ist, die der ersten Aufnahmeverbindungseinheit (J1) zugewandt ist, und selektiv entweder die Energieaufnahmeverbindungseinheit (J1) oder die Energiespeichervorrichtung (4) mit der ersten Energieumwandlungsvorrichtung (1) verbindet;
einen zweiten Schalter (9), der die elektrische Antriebsvorrichtung (5) mit der ersten Energieumwandlungsvorrichtung (1) verbindet; und
eine Steuervorrichtung (7),
wobei die Steuervorrichtung (7) aufweist:
einen Fahrmodus, in dem, wenn sich der Fahrmodus in einem Energiemodus befindet, die Energiespeichervorrichtung (4) und die erste Energieumwandlungsvorrichtung (1) durch den ersten Schalter (8) miteinander verbunden sind, die erste Energieumwandlungsvorrichtung (1) und die elektrische Antriebsvorrichtung (5) durch den zweiten Schalter (9) miteinander verbunden sind und die zweite Energieumwandlungsvorrichtung (2) und die elektrische Antriebsvorrichtung (5) durch die Energiebedarfsversorgungs-Schaltvorrichtung (3) miteinander verbunden sind, so dass die Wechselstromausgabe von der ersten Energieumwandlungsvorrichtung (1) und die Wechselstromausgabe von der zweiten Energieumwandlungsvorrichtung (2) der elektrischen Antriebsvorrichtung (5) zugeführt werden; wobei die Wechselstromausgabe von der ersten Energieumwandlungsvorrichtung (1) und die Wechselstromausgabe von der zweiten Energieumwandlungsvorrichtung (2) in Phase miteinander synchronisiert sind, und
einen Lademodus, in dem in einem Energieaufnahmezustand, in dem erfasst wird, dass eine vorbereitete Gleichstromenergiezufuhrvorrichtung (100) mit der Energieaufnahmeverbindungseinheit (J1) verbunden wurde, die Energieaufnahmeverbindungseinheit (J1) und die erste Energieumwandlungsvorrichtung (1) durch den ersten Schalter (8) miteinander verbunden sind, während der zweite Schalter (9) die erste Energieumwandlungsvorrichtung (1) und die elektrische Antriebsvorrichtung (5) nicht miteinander verbindet, und die erste Energieumwandlungsvorrichtung (1) und die zweite Energieumwandlungsvorrichtung (2) durch die Energiebedarfsversorgungs-Schaltvorrichtung (3) miteinander verbunden sind, so dass die aufgenommene Gleichstromenergie durch die erste Energieumwandlungsvorrichtung (1) in Wechselstromenergie umgewandelt wird, die Wechselstromenergie durch die zweite Energieumwandlungsvorrichtung (2) in Gleichstromenergie umgewandelt wird und die Gleichstromenergie der Energiespeichervorrichtung (4) zum Energieladen zugeführt wird, wobei
wenn der Fahrmodus ein Öko-Modus ist, der erste Schalter (8) mit dem b-Kontaktanschluss verbunden ist und der zweite Schalter (9) geöffnet ist, so dass die elektrische Antriebsvorrichtung (5) nur mit Wechselstromenergie versorgt wird, die über die zweite Energieumwandlungsvorrichtung (2) zugeführt wird.

2. Elektrischer Bewegungskörper (V) nach Anspruch 1, ferner umfassend eine elektrische Isoliervorrichtung (6), die an einer mittleren Position zwischen der Energiebedarfsversorgungs-Schaltvorrichtung (3) und der ersten Energieumwandlungsvorrichtung (1) angeordnet ist, um die erste Energieumwandlungsvorrichtung (1) und die zweite Energieumwandlungsvorrichtung (2) elektrisch voneinander zu isolieren, wenn die erste Energieumwandlungsvorrichtung (1) und die zweite Energieumwandlungsvorrichtung (2) miteinander verbunden sind.

3. Elektrischer Bewegungskörper (V) nach Anspruch 1, wobei
wenn der erste Schalter (8) mit dem a-Kontaktanschluss verbunden ist, Gleichstromenergie, die von der Energiespeichervorrichtung (4) zugeführt wird, in die erste Energieumwandlungsvorrichtung (1) eingegeben wird, und
wenn der erste Schalter (8) mit dem b-Kontaktanschluss verbunden ist, Gleichstromenergie, die von dem externen Gleichstrombus zugeführt wird, in die erste Energieumwandlungsvorrichtung (1) eingegeben wird.

4. Elektrischer Bewegungskörper (V) nach Anspruch 1, wobei
der erste Schalter (8) normalerweise die Energieaufnahmeverbindungseinheit (J1) mit der ersten Energieumwandlungsvorrichtung (1) verbindet, und
wenn der elektrische Bewegungskörper (V) einen Energiemodusbefehl zum Erhöhen der Energiezufuhr zu der elektrischen Antriebsvorrichtung (5) empfängt, der erste Schalter (8) die Energiespeichervorrichtung (4) mit der ersten Energieumwandlungsvorrichtung (1) verbindet und der zweite Schalter (9) die erste Energieumwandlungsvorrichtung (1) mit der elektrischen Antriebsvorrichtung (5) verbindet.

## Revendications

1. Corps mobile électrique (V) se déplaçant lorsqu'un dispositif électrique d'entraînement (5) est entraîné pour être mis en rotation en lui fournissant de l'énergie, le corps mobile électrique (V) comprenant :
une unité de connexion de réception d'énergie (J1) qui reçoit de l'énergie CC de l'extérieur ;
un premier dispositif de conversion d'énergie (1) qui convertit l'énergie CC reçue de l'unité de connexion de réception d'énergie (J1) en énergie CA ;
un dispositif de stockage d'énergie (4) qui stocke de l'énergie et fournit de l'énergie requise pour entraîner le dispositif électrique d'entraînement (5) pour être mis en rotation ;
un second dispositif de conversion d'énergie (2) qui convertit l'énergie CC du dispositif de stockage d'énergie (4) en énergie CA ;
un dispositif de commutation d'alimentation à la demande d'énergie (3) qui est disposé à une position intermédiaire entre le second dispositif de conversion d'énergie (2), le premier dispositif de conversion d'énergie (1) et le dispositif électrique d'entraînement (5), et connecte sélectivement soit le premier dispositif de conversion d'énergie (1) soit le dispositif électrique d'entraînement (5) au second dispositif de conversion d'énergie (2) ;
un premier commutateur (8), qui est disposé à une position intermédiaire entre l'unité de connexion de réception d'énergie (J1) et le premier dispositif de conversion d'énergie (1), a une borne commune, une borne de contact a disposée sur un côté faisant face au dispositif de stockage d'énergie (4), et une borne de contact b disposée sur un côté faisant face à la première unité de connexion de réception (J1) et connecte sélectivement soit l'unité de connexion de réception d'énergie (J1) soit le dispositif de stockage d'énergie (4) au premier dispositif de conversion d'énergie (1) ;
un second commutateur (9) qui connecte le dispositif électrique d'entraînement (5) au premier dispositif de conversion d'énergie (1) ; et
un dispositif de commande (7),
dans lequel le dispositif de commande (7) a :
un mode de déplacement dans lequel lorsque le mode de déplacement est dans un mode d'alimentation, le dispositif de stockage d'énergie (4) et le premier dispositif de conversion d'énergie (1) sont connectés l'un à l'autre par le premier commutateur (8), le premier dispositif de conversion d'énergie (1) et le dispositif électrique d'entraînement (5) sont connectés l'un à l'autre par le second commutateur (9), et le second dispositif de conversion d'énergie (2) et le dispositif électrique d'entraînement (5) sont connectés l'un à l'autre par le dispositif de commutation d'alimentation à la demande d'énergie (3), de sorte que l'énergie CA délivrée par le premier dispositif de conversion d'énergie (1) et l'énergie CA délivrée par le second dispositif de conversion d'énergie (2) sont fournies au dispositif électrique d'entraînement (5) ; dans lequel l'énergie CA délivrée par le premier dispositif de conversion d'énergie (1) et l'énergie CA délivrée par le second dispositif de conversion d'énergie (2) sont synchronisées l'une avec l'autre en phase, et
un mode de charge dans lequel, dans un état de réception d'énergie où il est détecté qu'un dispositif d'alimentation en énergie CC préparé (100) a été connecté à l'unité de connexion de réception d'énergie (J1), l'unité de connexion de réception d'énergie (J1) et le premier dispositif de conversion d'énergie (1) sont connectés l'un à l'autre par le premier commutateur (8) tandis que le second commutateur (9) ne connecte pas le premier dispositif de conversion d'énergie (1) et le dispositif électrique d'entraînement (5) l'un à l'autre, et le premier dispositif de conversion d'énergie (1) et le second dispositif de conversion d'énergie (2) sont connectés l'un à l'autre par le dispositif de commutation d'alimentation à la demande d'énergie (3), de sorte que l'énergie CC reçue est convertie en énergie CA par le premier dispositif de conversion d'énergie (1), l'énergie CA est convertie en énergie CC par l'intermédiaire du second dispositif de conversion d'énergie (2), et l'énergie CC est fournie au dispositif de stockage d'énergie (4) pour la charge d'énergie, dans lequel
lorsque le mode de déplacement est un mode éco, le premier commutateur (8) est connecté à la borne de contact b, et le second commutateur (9) est ouvert de sorte que le dispositif électrique d'entraînement (5) est alimenté uniquement en énergie CA fournie par l'intermédiaire du second dispositif de conversion d'énergie (2).

2. Corps mobile électrique (V) selon la revendication 1, comprenant en outre un dispositif d'isolation électrique (6) disposé à une position intermédiaire entre le dispositif de commutation d'alimentation à la demande d'énergie (3) et le premier dispositif de conversion d'énergie (1) pour isoler électriquement le premier dispositif de conversion d'énergie (1) et le second dispositif de conversion d'énergie (2) l'un de l'autre lorsque le premier dispositif de conversion d'énergie (1) et le second dispositif de conversion d'énergie (2) sont connectés l'un à l'autre.

3. Corps mobile électrique (V) selon la revendication 1, dans lequel
lorsque le premier commutateur (8) est connecté à la borne de contact a, de l'énergie CC fournie par le dispositif de stockage d'énergie (4) est entrée dans le premier dispositif de conversion d'énergie (1), et
lorsque le premier commutateur (8) est connecté à la borne de contact b, de l'énergie CC fournie par le bus CC externe est entrée dans le premier dispositif de conversion d'énergie (1).

4. Corps mobile électrique (V) selon la revendication 1, dans lequel
le premier commutateur (8) connecte normalement l'unité de connexion de réception d'énergie (J1) au premier dispositif de conversion d'énergie (1), et
lorsque le corps mobile électrique (V) reçoit une commande de mode d'énergie pour augmenter l'alimentation en énergie du dispositif électrique d'entraînement (5), le premier commutateur (8) connecte le dispositif de stockage d'énergie (4) au premier dispositif de conversion d'énergie (1), et le second commutateur (9) connecte le premier dispositif de conversion d'énergie (1) au dispositif électrique d'entraînement (5).
